# EUROPEAN PATENT SPECIFICATION

(11) **EP 4 550 153 B1**
(45) Date of publication and mention of the grant of the patent: **21.10.2026**
(21) Application number: 24211187.0
(22) Date of filing: 06.11.2024
(51) Int. Cl.: G06F 11/3604, G06F 30/20, G06F 11/3698, G06F 11/3668

(54) **METHOD AND APPARATUS FOR VERIFYING VEHICLE FUNCTION, ELECTRONIC DEVICE, AND STORAGE MEDIUM**
VERFAHREN UND VORRICHTUNG ZUR ÜBERPRÜFUNG EINER FAHRZEUGFUNKTION, ELEKTRONISCHE VORRICHTUNG UND SPEICHERMEDIUM
PROCÉDÉ ET APPAREIL DE VÉRIFICATION DE FONCTION DE VÉHICULE, DISPOSITIF ÉLECTRONIQUE ET SUPPORT D'INFORMATIONS

(30) Priority: 06.11.2023 CN 202311469457
(43) Date of publication of application: 07.05.2025
(73) Proprietor: Horizon Journey (Shanghai) Technology Co., Ltd., Shanghai 201306 (CN)
(72) Inventor: CHEN, Ke, Shanghai, 201306 (CN); YANG, Hu, Shanghai, 201306 (CN); LIU, Zehui, Shanghai, 201306 (CN); HU, Quan, Shanghai, 201306 (CN); JIA, Tong, Shanghai, 201306 (CN)
(74) Representative: Dehns Germany Partnerschaft mbB

(56) References cited:
- US-A1- 2021 096 571
- US-A1- 20250 083 690
- RUBAIYAT ABU HASNAT MOHAMMAD ET AL: "Experimental Resilience Assessment of an Open-Source Driving Agent", 2018 IEEE 23RD PACIFIC RIM INTERNATIONAL SYMPOSIUM ON DEPENDABLE COMPUTING (PRDC), IEEE, 4 December 2018 (2018-12-04), pages 54 - 63, XP033516825, DOI: 10.1109/PRDC.2018.00016
- MITRA PALLAVI ET AL: "Towards Modeling of Perception Errors in Autonomous Vehicles", 2018 21ST INTERNATIONAL CONFERENCE ON INTELLIGENT TRANSPORTATION SYSTEMS (ITSC), IEEE, 4 November 2018 (2018-11-04), pages 3024 - 3029, XP033470516, ISBN: 978-1-7281-0321-1, [retrieved on 20181207], DOI: 10.1109/ITSC.2018.8570015

## Description

### FIELD OF THE PRESENT DISCLOSURE

The present disclosure relates to an assisted driving technology, in particular to a method and apparatus for verifying a vehicle function, an electronic device, and a storage medium.

### BACKGROUND OF THE PRESENT DISCLOSURE

In fields such as autonomous driving and assisted driving, a vehicle usually has functions, such as Autonomous Emergency Braking (AEB), Adaptive Cruise Control (ACC), Navigate on Autopilot (NOA), and Highway Pilot (HWP), thereby providing users with service of corresponding functions. The implementation of these functions usually depends on perception results of a perception function of the vehicle (also known as an ego vehicle) to environments of the ego vehicle, and the environments may include dynamic objects, such as other vehicles, pedestrians, and cyclists around the ego vehicle, as well as static objects, such as lane lines and roadsides around the ego vehicle. The perception results need to be achieved based on a corresponding perception algorithm for the perception function of the ego vehicle, and the perception algorithm may include a perception algorithm based on at least one kind of sensor data of vision, laser radar, ultrasonic radar, millimeter wave radar, etc. The performance of the perception algorithm will be affected by factors, such as hardware and environmental changes during applications, which easily causes vehicle functions to fail to meet corresponding expected functional safety requirements or functional performance requirements.

US 2021096571 A1 discusses techniques for determining an error model based on vehicle data and ground truth data. To determine whether a complex system (which may be not capable of being inspected) is able to operate safely, various operating regimes (scenarios) can be identified based on operating data. To provide safe operation of such a system, an error model can be determined that can provide a probability associated with perception data and a vehicle can determine a trajectory based on the probability of an error associated with the perception data.

A paper titled as "Experimental Resilience Assessment of An Open-Source Driving Agent" (Abu Hasnat Mohammad Rubaiyat et al., 2018 IEEE 23RD PACIFIC RIM INTERNATIONAL SYMPOSIUM ON DEPENDABLE COMPUTING (PRDC), IEEE, 4 December 2018, pages 54-63, DOI: 10.1109.PRDC.2018.00016) recites a Systems-Theoretic Process Analysis (STPA) based fault injection framework to assess the resilience of an open-source driving agent under different environmental conditions and faults affecting sensor data. To increase the coverage of unsafe scenarios during testing, a strategic software fault-injection approach where the triggers for injecting the faults are derived from the unsafe scenarios is identified during the high-level hazard analysis of the system. The experimental results show that the proposed strategic fault injection approach increases the hazard coverage compared to random fault injection and, thus, can help with more effective simulation of safety-critical faults and testing of autonomous vehicles.

A paper titled "Towards Modelling of Perception Errors in Autonomous Vehicles" (Pallavi Mitra et al., 2018 21ST INTERNATIONAL CONFERENCE ON INTELLIGENT TRANSPORTATION SYSTEMS (ITSC), IEEE, 4 November 2018, pages 3024-3029, DOI: 10.1109/ITSC.2018.8570015, ISBN: 978-1-7281-0321-1) models the perception error for a vision based detection algorithm of the camera sensor by applying auto-regressive moving average (ARMA) and nonlinear auto-regressive (NAR) method. It will enable statistical error values to be injected into ideal values obtained from simulation models. A comparative analysis of the behavior of the autonomous vehicle with and without perception error model for the imperfection of camera sensor has been undertaken using the CarMaker platform. The investigation of the impact on the behavior of the autonomous vehicle by the variation of the state (distance, brake-torque) clearly depict the effectiveness of incorporating the error model at detection level in CarMaker.

### SUMMARY OF THE PRESENT DISCLOSURE

In order to solve the above-mentioned technical problem that the perception algorithm easily causes the vehicle functions to fail to meet the expected functional safety requirements, there are provided a method and apparatus for verifying a vehicle function, an electronic device, and a storage medium according to the present invention as defined by the independent claims. By simulating various perception failure situations of the perception algorithm, the tolerance of the vehicle functions to a performance of the perception algorithm is verified, which may be used for guiding the development and optimization of the perception algorithm, so that the perception algorithm may make the vehicle function meet the corresponding expected functional safety requirements or functional performance requirements.

According to a first aspect of the present invention, there is provided a method for verifying a vehicle function according to claim 1.

According to a second aspect of the present invention, there is provided an apparatus for verifying a vehicle function according to claim 11.

According to a third aspect of the present invention, there is provided a computer-readable storage medium, wherein the storage medium stores a computer program that, when executed by a processor, implements the method for verifying a vehicle function according to the present invention.

According to a fourth aspect of the present invention, there is provided an electronic device, including: a processor; and a memory configured to store a executable instruction; wherein the processor is configured to read the executable instruction from the memory and execute the instruction to implement the method for verifying a vehicle function according to the present invention.

According to a fifth aspect of the present disclosure, there is provided a computer program product, which, when an instruction thereon being executed by a processor, makes the processor to implement the method for verifying a vehicle function according to any one of the above-mentioned embodiments of the present disclosure.

Based on the method and apparatus for verifying a vehicle function, the electronic device, and the storage medium provided in the above-mentioned embodiments of the present disclosure, the operation scenario data of the at least one operation scenario may be acquired; the first perception result information corresponding to the preset vehicle function of the ego vehicle in each of the operation scenarios is determined based on the operation scenario data corresponding to each of the operation scenarios, and then, perception failure simulation processing may be performed on the first perception result information based on the perception failure simulation rule to obtain the second perception result information corresponding to each of the operation scenarios, so that the second perception result information includes at least one possible situation of perception failure of the perception algorithm in a real scenario; and the preset vehicle function is verified based on the second perception result information to obtain the verification result, which may determine whether a functional performance of the preset vehicle function in the case of perception failure meets a certain expected functional safety requirement or functional performance requirement, thereby determining the tolerance of the preset vehicle function to the perception failure of the perception algorithm by simulating various perception failure situations of the perception algorithm to facilitate guiding the development and optimization of the perception algorithm, and then ensuring that the perception algorithm may be able to make the preset vehicle function meet the corresponding expected functional safety requirement or functional performance requirement.

### BRIEF DESCRIPTION OF THE DRAWINGS

Fig. 1 is an exemplary application scenario of a method for verifying a vehicle function according to the present disclosure;
Fig. 2 is a schematic flow diagram of a method for verifying a vehicle function according to one exemplary embodiment of the present disclosure;
Fig. 3 is a schematic flow diagram of a method for verifying a vehicle function according to another exemplary embodiment of the present disclosure;
Fig. 4 is a schematic flow diagram of a method for verifying a vehicle function according to still another exemplary embodiment of the present disclosure;
Fig. 5 is a schematic diagram of division for an area surrounding an ego vehicle according to an exemplary embodiment of the present disclosure;
Fig. 6 is a schematic flow diagram of a method for verifying a vehicle function according to further exemplary embodiment of the present disclosure;
Fig. 7 is a schematic flow diagram of a method for verifying a vehicle function according to yet further exemplary embodiment of the present disclosure;
Fig. 8 is a schematic flow diagram of a method for verifying a vehicle function according to yet further another exemplary embodiment of the present disclosure;
Fig. 9 is a schematic structural diagram of an apparatus for verifying a vehicle function according to one exemplary embodiment of the present disclosure;
Fig. 10 is a schematic structural diagram of an apparatus for verifying a vehicle function according to another exemplary embodiment of the present disclosure;
Fig. 11 is a schematic structural diagram of an apparatus for verifying a vehicle function according to still another exemplary embodiment of the present disclosure; and
Fig. 12 is a structural diagram of an electronic device according to an embodiment of the present disclosure.

### DESCRIPTION OF THE EMBODIMENTS

In order to explain the present disclosure, exemplary embodiments of the present disclosure will be described in detail below with reference to the accompanying drawings. Obviously, the described embodiments are only a part of embodiments of the present disclosure, rather than all the embodiments.

It should be noted that relative layout, digital expressions and numerical values of components and steps described in these embodiments will limit to the scope of the present disclosure unless otherwise defined specifically.

### Summary of the present disclosure

During the implementation of the present disclosure, it is found by an inventor that in the fields such as autonomous driving and assisted driving, a vehicle usually has functions, such as Autonomous Emergency Braking (AEB), Adaptive Cruise Control (ACC), Navigate on Autopilot (NOA), and Highway Pilot (HWP), thereby providing users with service of corresponding functions. The implementation of these functions usually depends on perception results of a perception function of the vehicle (also known as an ego vehicle) to environments of the ego vehicle, and the environments may include dynamic object, such as other vehicle, pedestrian, and cyclist around the ego vehicle, as well as static object, such as lane line and roadside around the ego vehicle. The perception result needs to be achieved based on a corresponding perception algorithm for the perception function of the ego vehicle, and the perception algorithm may include a perception algorithm, which is specifically a target detection algorithm, a semantic segmentation algorithm, etc., based on at least one kind of sensor data of vision, laser radar, ultrasonic radar, millimeter wave radar, etc. The performance of the perception algorithm will be affected by factors, such as hardware and environmental changes during applications, which easily causes vehicle functions to fail to meet corresponding expected functional safety requirements or functional performance requirements.

### Exemplary summary

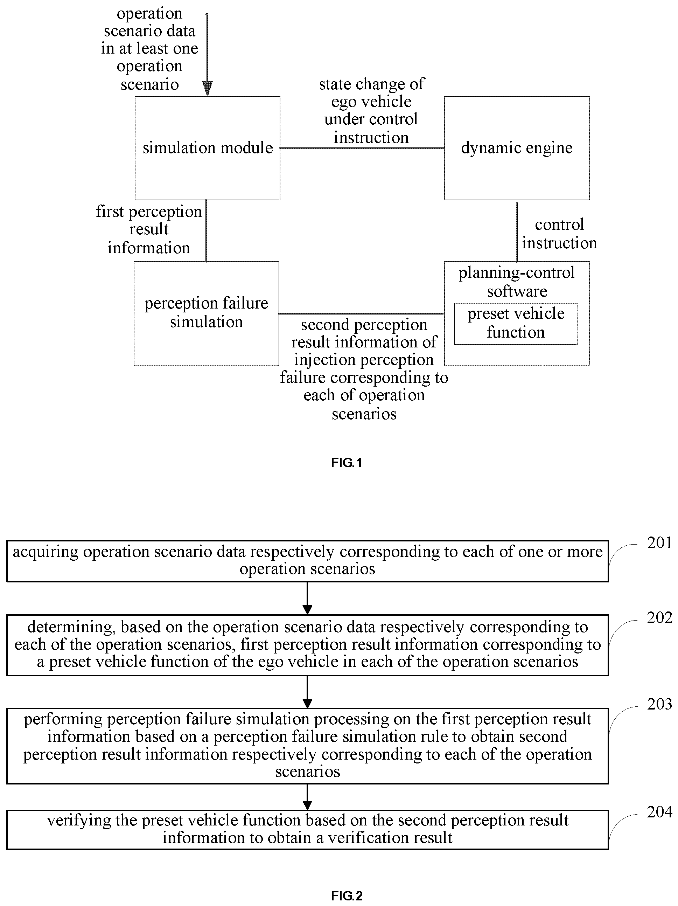

Fig. 1 is an application scenario of a method for verifying a vehicle function according to the present disclosure.

As shown in Fig. 1, the method for verifying a vehicle function in the present disclosure is achieved in an in-loop simulation system. The in-loop simulation system may include a simulation module, perception failure simulation (also known as perception fault injection), planning control software (planning-control software), and a dynamic engine, which may be implemented in software, hardware or firmware. The simulation module is configured to perform operation scenario simulation based on operation scenario data corresponding to each of at least one operation scenarios to obtain an accurate simulation perception result (i.e., first perception result information) corresponding to a preset vehicle function of an ego vehicle in each of the operation scenarios, and the perception failure simulation is used for performing perception failure simulation processing (also known as fault injection) on the accurate first perception result information to obtain second perception result information with simulation of a perception failure situation of a real scenario. The planning-control software includes various vehicle functions of the ego vehicle, wherein a vehicle function to be verified is a preset vehicle function. The planning-control software determines, based on a triggering rule for the preset vehicle function, whether the preset vehicle function needs to be triggered, and calculates control instructions of the ego vehicle (also known as control information), such as transverse control instructions and longitudinal control instructions for controlling the driving of the ego vehicle, based on a functional algorithm for the preset vehicle function in the case that the preset vehicle function is triggered. The dynamic engine is used for calculating driving state information of the ego vehicle within a period of time in the future based on the control instructions, and the simulation module determines, based on the driving state information of the ego vehicle within the period of time in the future and surrounding environmental information of the ego vehicle within the period of time in the future in the operation scenario data, whether the preset vehicle function of the ego vehicle may achieve a corresponding expected functional safety requirement or functional performance requirement in the case of perception failure. Or, the in-loop simulation system may further include an analysis module configured to determine, based on the driving state information of the ego vehicle within the period of time in the future and the surrounding environmental information of the ego vehicle within the period of time in the future in the operation scenario data, whether the preset vehicle function of the ego vehicle may achieve the corresponding expected functional safety requirement or functional performance requirement in the case of perception failure. For example, it is determined whether the vehicle been successfully braked using the AEB function to avoid collision with other surrounding traffic participants (such as target objects in a potential risk of triggering the AEB function). Based on this, the implementation of vehicle function verification based on the in-loop simulation system is beneficial to the obtaining of a perception algorithm failure situation allowed when the preset vehicle function meets an expected functional safety requirement or functional performance requirement, thereby providing effective perception failure situation reference data for the development and maintenance of the perception algorithm to optimize the perception algorithm. Therefore, the preset vehicle function can meet the corresponding expected functional safety requirement or functional performance requirement in the case of possible failure of the perception algorithm in a real scenario, and the driving safety of vehicles is improved.

### Exemplary method

Fig. 2 is a schematic flow diagram of a method for verifying a vehicle function according to one exemplary embodiment of the present disclosure. The method according to the present embodiment may be applied to an electronic device such as a terminal, a server, etc. As shown in Fig. 2, the method includes the following steps:
Step 201: acquiring operation scenario data respectively corresponding to each of one or more operation scenarios.

The operation scenario data includes state information of an ego vehicle and surrounding environmental information of the ego vehicle. The state information of the ego vehicle may include movement track information of the ego vehicle within a preset duration. The movement track information may include a state of the ego vehicle at each of time points within a preset duration, and the state may include for example one or more kinds of information on a position, a posture (an orientation), a speed, an accelerated speed, and an angular speed. The state information of the ego vehicle may be state information in a first coordinate system. The first coordinate system may be a world coordinate system or a reference coordinate system rigidly connected to the world coordinate system. The surrounding environmental information may include one or more kinds of behavior information, environmental information, road information, etc. of other road participants (which may be known as objects) around the ego vehicle. The behavior information of the other road participants may include one or more kinds of information on such as positions, postures, speeds, accelerated speeds, and angular speeds, of the other road participants at each of time points within a preset duration. The environmental information may include for example one or more kinds of time information and weather information, etc. The time information includes days, nights, etc. The weather information includes sunny days, rainy days, snowy days, etc. The road information may include road types (such as high-speed roads and urban roads), lane line information, road conditions (such as flat roads, uphill roads, and downhill roads), etc. The operation scenario data is used for simulating an operation situation of the ego vehicle in a certain environment, and provides simulated perception result information for verifying the preset vehicle function of the ego vehicle.

In some optional embodiments, the surrounding environmental information may further include at least one of positioning information, navigation information, high-precision map information, etc., for assisting in simulating real operation scenarios.

In some optional embodiments, the operation scenario data may include a scenario description file and a scenario map file which are generated in advance. The scenario description file is used for describing the state information of the ego vehicle and behavior information of other dynamic objects around the ego vehicle. The scenario map file is used for describing environmental information and road information of the operation scenarios. A specific expression way of the operation scenario data is not limited.

In some optional embodiments, the number of the operation scenarios and specific scenarios may be set according to an actual demand of the preset vehicle function. For example, the operation scenarios may include a scenario in which there are other vehicles behind the ego vehicle, there are opposite vehicles on an adjacent lane, there are other vehicles with low speeds in front of a highway, there are other vehicles cutting in the front, or there are pedestrians crossing a road in front of an intersection, etc. Each operation scenario may be further generalized according to a relationship between other objects around the ego vehicle and the ego vehicle to obtain more fine-grained operation scenarios, such as a plurality of operation scenarios in which there are other vehicles at different distances behind the ego vehicle, there are opposite coming vehicles with different speeds on an adjacent lane, there are other vehicles with different queue cutting in the front, etc. Each of the fine-grained operation scenarios is used as an operation scenario to obtain at least one operation scenario for vehicle function verification.

Step 202: determining, based on the operation scenario data respectively corresponding to each of the operation scenarios, first perception result information corresponding to a preset vehicle function of the ego vehicle in each of the operation scenarios.

For any operation scenario, the first perception result information of the preset vehicle function of the ego vehicle in the operation scenario may include behavior information and road information of other objects around the ego vehicle.

In some optional embodiments, the first perception result information may be perception result information in a coordinate system of the ego vehicle.

In some optional embodiments, for any operation scenario, the first perception result information may include perception result information of the ego vehicle at at least one trajectory point in the operation scenario. The perception result information of the ego vehicle at any trajectory point includes behavior information and road information of other objects around the ego vehicle at the trajectory point.

The operation scenario data includes the state information and the surrounding environmental information of the ego vehicle, and therefore, traffic flow information around the ego vehicle may be obtained by analyzing the operation scenario data, and then, the first perception result information corresponding to the preset vehicle function of the ego vehicle in each of the operation scenarios is obtained. During vehicle function verification, for each operation scenario being verified, other object around the ego vehicle are determined according to the state information and the surrounding environmental information of the ego vehicle at any trajectory point, wherein other object may include dynamic object, such as other vehicle, pedestrians, and cyclists around the ego vehicle, as well as static object, such as lane line and roadside; and object state information of other object relative to the ego vehicle may be determined as first perception result information. That is, the first perception result information may include simulated perceived state information of other objects around the ego vehicle relative to the ego vehicle, such as positions, orientations, speeds, accelerated speeds, and angular speeds, etc. Compared with a perception result obtained in a real environment by using a perception algorithm, a perception result obtained based on the operation scenario data is determined based on states of the ego vehicle and surrounding objects in a simulated operation scenario, but is not determined based on an actual perception algorithm, which is not affected by factors such as hardware and environmental changes, and belongs to an accurate perception result without perception failure (or perception faults).

In some optional embodiments, the types and number of other objects included in the first perception result information are set according to specific operation scenario data and a perception demand of the preset vehicle function and are not specifically limited. For example, for the AEB function, obstacle objects around the ego vehicle and affecting the driving of the ego vehicle need to be perceived to determine whether the obstacle objects have a risk of collision with the ego vehicle and whether the AEB function needs to be triggered, etc.

Step 203: performing perception failure simulation processing on the first perception result information based on a perception failure simulation rule to obtain second perception result information respectively corresponding to each of the operation scenarios.

The perception failure simulation rule may be set according to a perception failure situation easily caused for the preset vehicle function in a real operation scenario, and is used for performing perception failure simulation processing (also known as perception fault injection) on the accurate first perception result information to obtain the second perception result information with perception failure.

In some optional embodiments, the perception failure simulation rule may include a triggering condition for perception failure simulation processing and a failure simulation rule. The triggering condition may be set according to a verification demand of the preset vehicle function. For example, the triggering condition includes that when a position relationship between each of other objects and the ego vehicle meets a certain condition, perception failure simulation processing for perception results for other objects is triggered. Perception failure simulation processing may include at least one of simulation processing, such as missing detection, false detection, detection delay, detection instability, a detection distance error, and a detection speed error simulated for other objects. For different objects, corresponding simulation rules (i.e., failure simulation rules) may be set. The simulation rule may include simulation ranges, simulation precisions, etc. of parameters (which may be known as failure parameters or fault parameters), such as a missing detection duration, a missing detection frequency, a false detection duration, a false detection frequency, delay time, a distance error, and a speed error. For example, for the AEB function, after a potential risk object is found, the AEB function is triggered, and perception failure simulation processing is performed on first perception result information of the risk object according to a simulation rule with a certain missing detection duration and frequency, so that second perception result information with a missing-detected perception fault is obtained.

In some optional embodiments, for the first perception result information of other object which may be subjected to perception failure simulation, at least one kind of perception failure simulation processing may be performed to obtain the corresponding second perception result information.

Step 204: verifying the preset vehicle function based on the second perception result information to obtain a verification result.

For the second perception result information, verification for the preset vehicle function based on the second perception result information is to verify whether the preset vehicle function may meet the corresponding expected functional safety requirement or functional performance requirement under the second perception result information. The obtained verification result includes at least one of a function response state of the preset vehicle function under the second perception result information and a perception performance threshold of a perception algorithm allowed by the preset vehicle function. The perception performance threshold may be determined based on the function response state under the second perception result information.

Based on the method for verifying a vehicle function provided in the above-mentioned embodiments of the present disclosure, the operation scenario data of the one or more operation scenarios may be acquired; the first perception result information corresponding to the preset vehicle function of the ego vehicle in each of the operation scenarios is determined based on the operation scenario data corresponding to each of the operation scenarios, and then, perception failure simulation processing may be performed on the first perception result information based on the perception failure simulation rule to obtain the second perception result information corresponding to each of the operation scenarios, so that the second perception result information includes at least one possible situation of perception failure of the perception algorithm in a real scenario; and the preset vehicle function is verified based on the second perception result information to obtain the verification result, by which it may be determined whether a functional performance of the preset vehicle function in the case of perception failure meets a certain expected functional safety requirement or functional performance requirement, thereby determining the tolerance of the preset vehicle function to the perception failure of the perception algorithm by simulating various perception failure situations of the perception algorithm to facilitate guiding the development and optimization of the perception algorithm, and then ensuring that the perception algorithm may make the preset vehicle function meet the corresponding expected functional safety requirement or functional performance requirement.

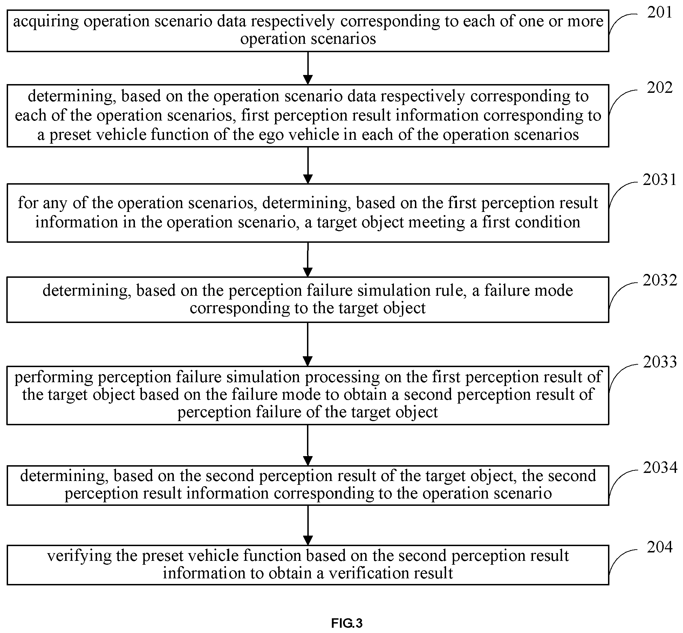

Fig. 3 is a schematic flow diagram of a method for verifying a vehicle function according to the invention of the present disclosure.

The first perception result information includes first perception results of at least one object around the ego vehicle. Step 203 of performing perception failure simulation processing on the first perception result information based on a perception failure simulation rule to obtain second perception result information respectively corresponding to each of the operation scenarios includes:
step 2031: for any of the operation scenarios, determining, based on the first perception result information in the operation scenario, a target object meeting a first condition.

The first condition is set according to the preset vehicle function. The first condition may include a condition of a relative relationship between each of objects around the ego vehicle and the ego vehicle in the operation scenario, such as conditions of position and speed relationships between each of the surrounding objects and the ego vehicle. For example, the first condition may be that a distance from each of the objects to the ego vehicle is smaller than a distance threshold. The target object may be dynamic object, such as vehicle and pedestrian, or static object, such as lane line and roadside.

In some optional embodiments, the first perception result of each of the objects around the ego vehicle may be used as a perception result in a coordinate system of the ego vehicle. The target object meeting the first condition may be determined by matching with the first condition based on the first perception result of each of the objects around the ego vehicle. The specific first condition obtained when the different objects are determined as the target object may be different.

Step 2032: determining, based on the perception failure simulation rule, a failure mode corresponding to the target object.

The perception failure simulation rule may include mapping rules of the different objects and the failure modes and simulation rules of the different failure modes. The failure mode of the different objects may be different. The different failure modes may correspond to different perception failure simulation processing ways (i.e., the simulation rules). For example, for vehicle object cutting in the front, the perception failure simulation processing corresponding to the failure mode thereof may include simulation of missing detection, false detection, a detection distance error, etc. For lane line object, the perception failure simulation processing corresponding to the failure mode thereof may include a transverse distance error. etc.

In some optional embodiments, according to Operational Design Domains (ODD) of automatic driving, assisted driving and other functions, functional safety and expected functional safety Hazard Analysis and Risk Assessment (HARA) for vehicle functions may be performed, and functional safety goals (i.e., goals to be achieved at a functional safety level) may be determined, wherein the functional safety goals include avoiding braking loss, avoiding unexpected braking, etc. The functional safety goals are analyzed in way of Fault Tree Analysis (FTA) and Design Failure Mode and Effects Analysis (DFMEA) to obtain failure modes of the perception algorithm under the corresponding functional safety goals, such as missing detection, false detection, detection delay, detection instability, and a detection error, etc. According to the operation scenario and the analysis of the ODD in HARA analysis, a parameter range of each operation scenario, such as a range of parameter including longitudinal speed, longitudinal distance and transverse speed of the target object, is determined. Moreover, the parameter range may be associated with the operation scenario to generate the operation scenario data of different operation scenarios to verify the vehicle functions, and determine the failure modes of the target object in the operation scenario.

Exemplarily, for the HARA of a highway pilot (HWP) function, there is a hazard event that a front vehicle cuts into the ego vehicle without slowing down and a safety goal that the HWP function needs to prevent braking loss. A low-level failure mode may be obtained by FTA and DFMEA, such as missing detection of cut-in vehicles (that is, missing detection is performed on the cut-in vehicles by using the perception algorithm) or overlarge longitudinal ranging of the cut-in vehicles (that is, a detection distance error leads to large longitudinal distances of the cut-in vehicles perceived by the perception algorithm, but the longitudinal distances are not large in practice). For such safety goals and the definition of the ODD, parameter ranges of variables, such as longitudinal speeds, longitudinal distances and transverse speeds of the cut-in vehicles in a cut-in process are set. Specific parameter distribution within the parameter ranges may be determined by means of statistics and collection of natural driving data, for example, it may be obtained by analyzing and extracting drive test data and aerial survey data. Missing detection is used as a failure mode in an operation scenario that there are vehicles cutting in the front. By generalizing the missing detection duration and the missing detection frequency, various failure sub-modes, such as a long-time missing detection sub-mode and a short time high-frequency missing detection sub-mode, in the operation scenario may be determined. Fine-grained generalization may be further performed on a specific missing detection duration and missing detection frequency of each failure mode or failure sub-mode to obtain fine-grained fault parameters (i.e., failure parameters) in various failure sub-modes. For example, any determined missing detection duration value and missing detection frequency value are used as a group of fault parameters in the failure mode or failure sub-mode.

Exemplarily, in the HARA of the HWP function, there is a hazard event that there is ego vehicle braking (i.e., unexpected braking) of a vehicle on a lateral front lane and a safety goal of preventing the unexpected braking. A low-level failure mode, such as a mode that a lateral vehicle is inaccurate in transverse ranging, an actual transverse distance is longer while a transverse distance perceived by the perception algorithm is shorter, which leads to the unexpected braking of the ego vehicle, may be obtained by FTA and DFMEA. For such safety goals, parameter ranges of variables, such as longitudinal distances, transverse distances and longitudinal speeds of lateral front vehicles are defined to generate the operation scenario data of the various operation scenarios. A transverse detection error is used as a failure mode, and various fine-grained fault parameters in the failure mode may be obtained by generalizing different transverse detection distance errors. For example, each transverse detection distance error value obtained by generalization is used as a fault parameter in the failure mode.

Step 2033, performing perception failure simulation processing on the first perception result of the target object based on the failure mode to obtain a second perception result of perception failure of the target object.

After the failure mode of the target object is determined, perception failure simulation processing corresponding to the failure mode may be performed on the first perception result of the target object based on the failure mode of the target object to obtain the second perception result of perception failure of the target object.

The second perception result with at least one duration and frequency combination may be obtained by performing missing detection simulation on the target object for different durations and/or at different frequencies. For example, in the first perception result information, the target object is detected at time points A to B, and the preset vehicle function is triggered. The generated second perception result is within a time period between the time point A and the time point B, missing detection is performed on the target object for a missing detection duration T1 and at a missing detection frequency F1, so that it is simulated whether a successful response is made to the preset vehicle function in the case of missing detection.

Step 2034, determining, based on the second perception result of the target object, the second perception result information corresponding to the operation scenario.

The second perception result information may include at least one second perception result corresponding to the target object in the operation scenario.

In some optional embodiments, for failure modes, such as missing detection, false detection, a detection distance error, and a detection speed error (also known as a perception fault), in order to ensure the accuracy and reliability of vehicle function verification, the different second perception results may be generated for different fault parameters (also known as failure parameters, such as a missing detection duration, a missing detection frequency, a false detection duration, and a false detection frequency) of each perception fault. For example, various fault parameters may be set for a missing detection fault, different fault parameters correspond to different missing detection durations and/or different missing detection frequencies, and thus, the second perception results respectively corresponding to the various fault parameters may be obtained. For any operation scenario, one of the first perception results of the target object may correspond to one or more of the second perception results. That is, the second perception result information corresponding to the operation scenario may include at least one second perception result corresponding to each target object of the one or more target objects.

In the present embodiment, by setting the corresponding failure modes for the different objects, when it is determined that there is the target object meeting the first condition, perception fault injection may be performed on the first perception result of the target object based on the failure mode corresponding to the target object to obtain perception fault injected second perception result of the target object, which is beneficial to the improvement of the accuracy and effectiveness of perception failure simulation.

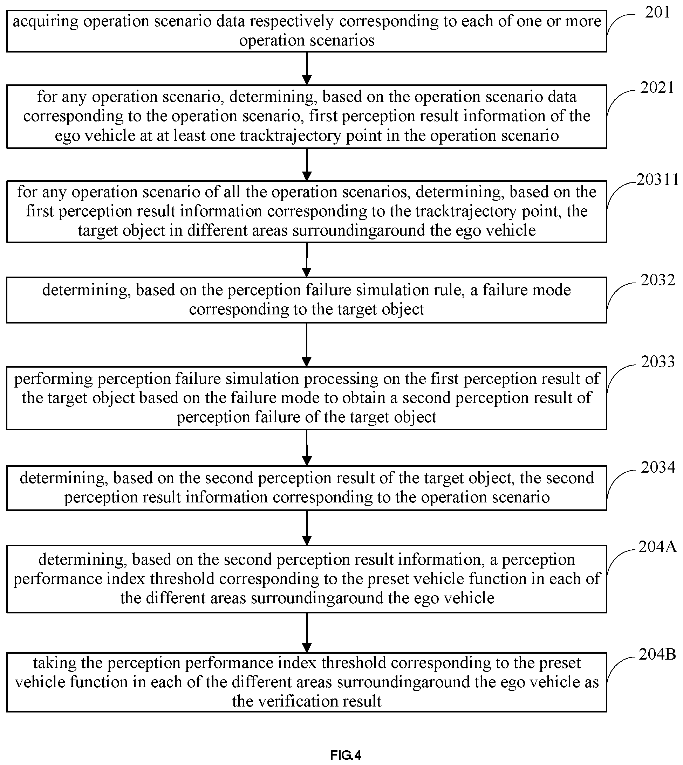

Fig. 4 is a schematic flow diagram of a method for verifying a vehicle function according to further exemplary embodiment of the present disclosure.

In some optional embodiments, step 202 of determining, based on the operation scenario data respectively corresponding to each of the operation scenarios, first perception result information corresponding to a preset vehicle function of the ego vehicle in each of the operation scenarios includes:

step 2021, for any operation scenario, determining, based on the operation scenario data corresponding to the operation scenario, first perception result information of the ego vehicle at at least one trajectory point in the operation scenario.

The ego vehicle has a certain driving track when driving in the operation scenario, and points on the driving track are known as trajectory points. The operation scenario data includes data for describing state information of the ego vehicle, and each trajectory point of the ego vehicle in the operation scenario may be obtained by analyzing the operation scenario data. The first perception result information of the ego vehicle at any trajectory point may be obtained in combination with the surrounding environmental information of the ego vehicle in the operation scenario data. With the movement of the ego vehicle, relative relationships between each of other surrounding objects and the ego vehicle may be different when the ego vehicle is at the different trajectory points. That is, other object existing in the different areas around the ego vehicle may be different.

Step 2031 of for any operation scenario, determining, based on the first perception result information in the operation scenario, a target object meeting a first condition comprises, includes:

step 20311, for any operation scenario of all the operation scenarios, determining, based on the first perception result information corresponding to the trajectory point, the target object in different areas around the ego vehicle.

For each of the operation scenarios, the target object in the different areas around the ego vehicle may be determined based on the first perception result information corresponding to each of the trajectory points of the ego vehicle in the operation scenario.

In some optional embodiments, an area around the ego vehicle may be divided into different areas according to a preset area division rule. For example, the area of the ego vehicle is divided into the different areas by a grid coordinate system.

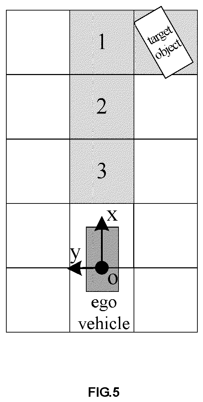

Exemplarily, Fig. 5 is a schematic diagram of division for an area surrounding an ego vehicle provided in an exemplary embodiment of the present disclosure. As shown in Fig. 5, the area of the ego vehicle is divided into a plurality of grids by a grid coordinate system (also known as a grid map), and each grid represents an area around the ego vehicle. xoy represents a vehicle coordinate system of the ego vehicle. The grid coordinate system may take any position of the coordinate system of the ego vehicle as an origin of coordinates, for example, an origin of the vehicle coordinate system of the ego vehicle is taken as the origin. That is, a relative relationship between the grid coordinate system and the coordinate system of the ego vehicle is not changed. With the movement of the ego vehicle, the coordinate system of the ego vehicle changes, and the grid coordinate system changes with the coordinate system of the ego vehicle to represent the different areas around the ego vehicle all the time. For example, with the continuous movement of the ego vehicle and the target object, position change of the target object relative to the ego vehicle may change from grid 1 to grid 2 to grid 3 in the figure. Sizes (a length and a width) of each grid of the grid coordinate system may be set as any sizes which are not specifically limited.

In the present embodiment, the target object in the different areas around the ego vehicle are determined based on the first perception result information of the ego vehicle at each trajectory point in the operation scenario, which facilitates determining the triggering of perception failure simulation on one hand, and is beneficial to the finer-grained verification of the tolerance of the preset vehicle function to perception failure of the target object in the different areas on the other hand.

In some optional embodiments, the driving of the ego vehicle in any operation scenario may be simulated by an in-loop simulation system, and current first perception result information is obtained in real time during driving, wherein the current first perception result information may include state information of the target object in the different areas around the ego vehicle. Moreover, it is determined, based on a preset condition, whether the perception fault injection is triggered, for example, it is determined whether the target object in the different areas meet a perception fault injection triggering condition (such as perception fault injection corresponding to grid 2 is triggered when position of the target object relative to the ego vehicle in Fig. 5 is grid 2). If it is determined that the perception fault injection is triggered, perception fault injection is performed on the current first perception result information to obtain current second perception result information, then, the preset vehicle function is verified based on the second perception result information to determine a function response state of the preset vehicle function, and thus, a function response state of the perception fault injection at each trajectory point of the ego vehicle during driving in an operation scenario may be obtained, that is, function response states of perception fault injection in the different areas around the ego vehicle may be obtained. Perception fault injection in various failure modes may also be respectively performed on the first perception result information at the current trajectory point, and thus, function response states of various perception fault injection at each trajectory point may be obtained. Based on this, different types of perception performance thresholds, such as a missing detection duration threshold, a missing detection frequency threshold, a longitudinal distance error threshold, a transverse distance error threshold, a longitudinal speed error threshold, a transverse speed error threshold, a detection delay threshold in grid 1 in Fig. 5, in the different areas around the ego vehicle may be obtained in combination with the great number of operation scenarios, the various failure modes and specific sub-modes, and the different trajectory points.

In some optional embodiments, the failure parameters may be traversed according to influences on the preset vehicle function from little to great, for example, a smaller detection error, a missing detection duration and a false detection duration are verified first. For example, since the error is smaller, the preset vehicle function may allow the existence of the error to achieve an expected result, and thus, the function response state is shown as success. As the failure parameters get larger and larger, after a perception performance index reaches an allowable boundary of the preset vehicle function, the functional response state of the preset vehicle function will be shown as failure, and thus, the perception performance threshold which may be allowed by the preset vehicle function may be obtained.

In some optional embodiments, the perception performance index may also be denoted as a perception delay index, a perception recall rate, a detection distance precision, a detection speed precision, etc. For example, a perception performance index corresponding to long-time missing detection may be denoted as the perception delay index. A perception performance index corresponding to short-time high-frequency missing detection may be denoted as the perception recall rate. A perception performance index corresponding to a transverse/longitudinal distance error may be denoted as the detection distance precision. A perception performance index corresponding to a transverse/longitudinal speed error may be denoted as the detection speed precision. Thus, each of a perception delay index threshold, a perception recall rate threshold, a detection distance precision threshold and a detection speed precision threshold is used as the verification result to guide the development and optimization of the perception algorithm.

In some optional embodiments, step 204 of verifying the preset vehicle function based on the second perception result information to obtain a verification result includes:
step 204A: determining, based on the second perception result information, a perception performance threshold corresponding to the preset vehicle function in each of the different areas around the ego vehicle.

The perception performance threshold includes an index threshold corresponding to each failure mode, such as a missing detection duration threshold, a missing detection frequency threshold, a false detection duration threshold, a false detection frequency threshold, a detection delay time threshold, a detection distance error threshold, and a detection speed error threshold. The detection distance error threshold may also be subdivided into a transverse distance error threshold and a longitudinal speed error threshold. The specific division of the perception performance index may be set according to a demand of the preset vehicle function.

In some optional embodiments, for each area, it may be determined, based on the second perception results of the target object in the area, whether the preset vehicle function is triggered and whether the response state of the preset vehicle function may avoid hazard events in the case that the preset vehicle function is triggered. For the second perception results in any failure mode, if the response state of the preset vehicle function is shown as success, it is determined that the area may meet the expected functional safety requirement or functional performance requirement in the failure mode. The failure modes in which the area may meet the expected functional safety requirement or functional performance requirement may be determined based on the response state of the preset vehicle function in a large number of failure modes in the area, and the performance threshold corresponding to the area may be determined based on these failure modes.

Step 204B: taking the perception performance threshold corresponding to the preset vehicle function in each of the different areas around the ego vehicle as the verification result.

After the perception performance threshold corresponding to each of the different areas around the ego vehicle is obtained, the perception performance threshold corresponding to each of the different areas may be used as the verification result to guide the development and optimization of the perception algorithm.

In the present embodiment, the perception performance threshold corresponding to each of the different areas around the ego vehicle is determined as the verification result, which achieves finer-grained determination of the perception performance threshold, is beneficial to the provision of a more accurate and effective perception performance threshold for the development and optimization of the perception algorithm, and further provides the reliability of the perception algorithm.

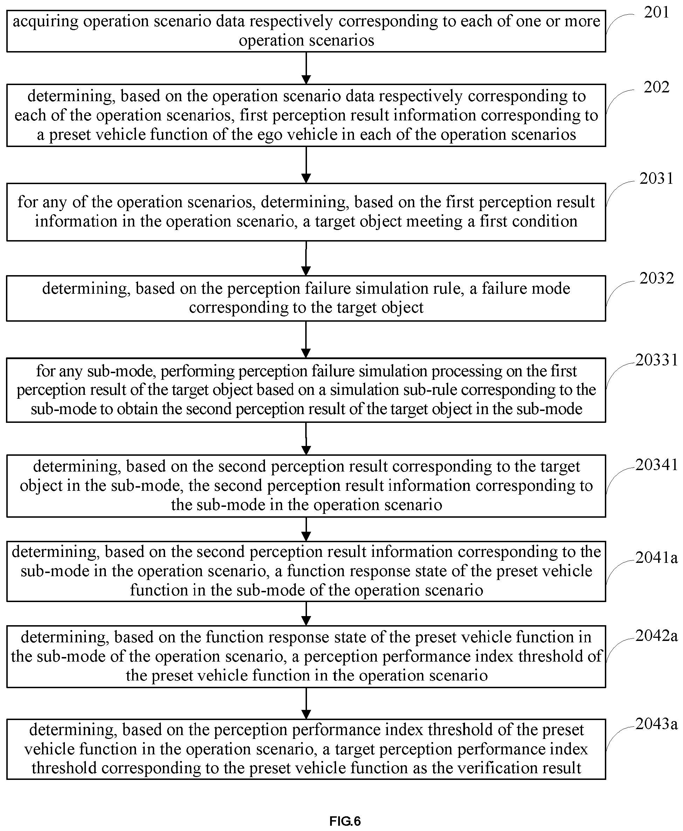

Fig. 6 is a schematic flow diagram of a method for verifying a vehicle function according to further exemplary embodiment of the present disclosure.

In some optional embodiments, the failure modes include at least one type of sub-mode.

In some optional embodiments, step 2033 of performing perception failure simulation processing on the first perception result of the target object based on the failure mode to obtain a second perception result of perception failure of the target object includes:

step 20331: for any sub-mode, performing perception failure simulation processing on the first perception result of the target object based on a simulation sub-rule corresponding to the sub-mode to obtain the second perception result of the target object in the sub-mode.

The sub-modes are obtained by finer-grained division for a failure mode. For example, a false detection failure mode may be subdivided into a plurality of sub-modes, such as long-time false detection and short-time high-frequency false detection, according to different false detection durations and different false detection frequencies. The detection error may be subdivided into sub-modes, such as a detection distance error and a detection speed error, or may be subdivided into sub-modes, such as a transverse distance error, a longitudinal distance error, a transverse speed error, and a longitudinal distance error, or may be subdivided into sub-modes, such as an error enabling a detection result to be larger, and an error enabling the detection result to be smaller. The sub-modes may be further obtained by finer-grained division. The specific division of the sub-modes may be set according to a specific operation scenario of the preset vehicle function.

In some optional embodiments, for each of the sub-modes, a corresponding simulation sub-rule may be set, so that perception failure simulation processing is performed on the first perception result of the target object to obtain the second perception result of the target object in the sub-mode.

In some optional embodiments, for each of the sub-modes, the simulation sub-rule corresponding to the sub-mode may include a failure parameter range and a failure simulation precision which correspond to the sub-mode, so that a plurality of failure parameters are determined within the failure parameter range; and each of the failure parameters is used for fault injection on the first perception result of the target object to obtain a second perception result corresponding to the failure parameter. The second perception result of the target object in any sub-mode may include the second perception result respectively corresponding to each of the plurality of failure parameters. If each of the failure parameters is used as a sub-mode, the second perception result of the target object in the sub-mode include the second perception result corresponding to the failure parameter, which is not specifically limited.

Step 2034 of determining, based on the second perception result of the target object, the second perception result information corresponding to the operation scenario includes:
step 20341: determining, based on the second perception result corresponding to the target object in the sub-mode, the second perception result information corresponding to the sub-mode in the operation scenario.

The second perception result information of the operation scenario in any sub-mode may include the second perception result of each of the one or more target objects in the sub-mode.

In some optional embodiments, for each of the operation scenarios, in-loop verification may be performed on the preset vehicle function based on the second perception result information corresponding to the operation scenario in each of the sub-modes to obtain a degree of tolerance of the preset vehicle function to a perception performance index of the perception algorithm, so that the perception performance threshold of the perception algorithm is obtained.

In the present embodiment, by performing finger-grained division on the failure mode, the second perception result information of each of the operation scenarios in each of the sub-modes is obtained, which is beneficial to the more accurate and effective verification on the preset vehicle function, and provides the accuracy and effectiveness of the perception performance threshold of the perception algorithm allowed by the preset vehicle function.

In some optional embodiments, step 204 of verifying the preset vehicle function based on the second perception result information to obtain a verification result includes:

Step 2041a: determining, based on the second perception result information corresponding to the sub-mode in the operation scenario, a function response state of the preset vehicle function in the sub-mode of the operation scenario.

The function response state may include two states of success and failure. The success represents that the preset vehicle function may reach an expected result in the sub-mode. For example, the AEB function may cause the vehicle to be successfully braked to avoid collision with the target object. The failure represents that the preset vehicle function does not achieve an expected result in the sub-mode. For example, in the HWP function, a longitudinal distance from a front vehicle is smaller than the minimum distance safety threshold. The success of the function response state may also be determined according to results that Time to Collision (TTC) is greater than a safety time threshold, a distance out of a center line of a lane exceeds a safe distance threshold, etc., which may be set according to the preset vehicle function.

In some optional embodiments, for each of the sub-modes of each of the operation scenarios, it may be determined, based on the second perception result information of the sub-mode, whether the preset vehicle function is triggered, and if the preset vehicle function is triggered, control information of the ego vehicle is calculated based on a functional algorithm of the preset vehicle function, a driving track of the ego vehicle controlled by the control information is determined based on the control information of the ego vehicle, and it is determined, in combination with the surrounding environment data in the operation scenario data of the operation scenario, whether the driving track of the ego vehicle and each of other surrounding object may achieve the expected result. If the expected result may be achieved, it is determined that the functional response state is shown as success, or else, it is determined that the function response state is shown as failure.

Step 2042a, determining, based on the function response state of the preset vehicle function in the sub-mode of the operation scenario, a perception performance threshold of the preset vehicle function in the operation scenario.

A perception performance index which may be allowed by the preset vehicle function in the operation scenario, i.e., a perception performance index (a failure parameter) showing the function response state as success, such as an allowable missing detection duration, missing detection frequency, false detection duration, false detection frequency, detection distance error, and detection speed error, may be determined based on the function response state of the preset vehicle function in each of the sub-modes of the operation scenario. Then, the perception performance threshold of the preset vehicle function in the operation scenario may be determined based on the allowable perception performance index.

Step 2043a: determining, based on the perception performance threshold of the preset vehicle function in the operation scenario, a target perception performance threshold corresponding to the preset vehicle function as the verification result.

In some optional embodiments, the target perception performance threshold corresponding to the preset vehicle function may be determined as the verification result in combination with the perception performance threshold of the preset vehicle function in each of the operation scenarios.

In some optional embodiments, all the operation scenarios may be classified, and for the same type of operation scenarios, the target perception performance threshold of the preset vehicle function in the type of operation scenario may be determined in combination with a plurality of operation scenarios. For example, the target perception performance threshold in the operation scenario is determined in combination with a plurality of operation scenarios that there are vehicles cutting in the front. For example, the minimum perception performance threshold in a plurality of operation scenarios in the same type of operation scenarios may be used as the target perception performance threshold in the same type of operation scenarios, so that the functional safety of each of the operation scenarios in the type of operation scenarios is ensured.

In the present embodiment, by determining a function response state of the preset vehicle function in each of the sub-modes of each of the operation scenarios, the tolerance of the preset vehicle function to a perception fault of each of the sub-modes may be determined, then, the perception performance threshold of the preset vehicle function in each of the operation scenarios may be determined, the target perception performance threshold corresponding to the preset vehicle function may be obtained in combination with the perception performance threshold of the preset vehicle function in each of the operation scenarios. By in-loop simulation verification on a large number of sub-modes of a large number of operation scenarios, a target perception performance index corresponding to the preset vehicle function is accurately and effectively determined, which is beneficial to the increase of the verification efficiency.

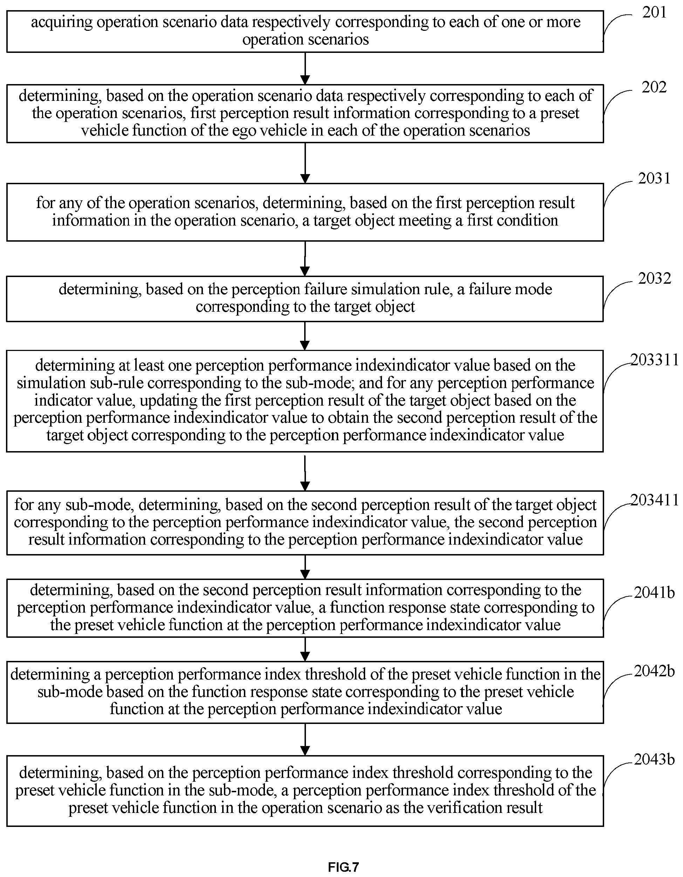

Fig. 7 is a schematic flow diagram of a method for verifying a vehicle function provided in yet further exemplary embodiment of the present disclosure.

In some optional embodiments, step 20331 of performing perception failure simulation processing on the first perception result of the target object based on a simulation sub-rule corresponding to the sub-mode to obtain the second perception result of the target object in the sub-mode includes:
step 203311: determining at least one perception performance indicator value based on the simulation sub-rule corresponding to the sub-mode; and for any perception performance indicator value, updating the first perception result of the target object based on the perception performance indicator value to obtain the second perception result of the target object corresponding to the perception performance indicator value.

The perception performance indicator value may include a missing detection duration, a missing detection frequency, a false detection duration, a false detection frequency, a detection distance error, a detection speed error, detection delay time, etc.

In some optional embodiments, at least one perception performance indicator value may be determined according to a sub-mode and a corresponding simulation sub-rule. For example, the sub-mode is a long-time missing detection mode, and then, the simulation sub-rule may include a missing detection duration range and a sampling precision; for example, the missing detection duration range is [t1,t2]s, and the sampling precision is 0.01 s, then, each of missing detection durations t1, t1+0.01, t1+0.02, ..., t2 may be determined within the missing detection duration range, and each of the missing detection durations is used as one of the perception performance indicator values. Or, a combination of a missing detection duration and a missing detection frequency is used as one of the perception performance indicator values, which is not specifically limited. For another example, the sub-mode is a longitudinal distance error mode, the simulation sub-rule may include a longitudinal distance error range and a sampling precision, and then, a plurality of longitudinal distance error values may be sampled as the perception performance indicator values within the longitudinal distance error range based on the sampling precision.

In some optional embodiments, for any perception performance indicator value, perception fault injection is performed on the first perception result of the target object based on the perception performance indicator value to obtain the second perception result of the target object corresponding to the perception performance indicator value. For example, missing detection fault injection is performed on the first perception result of the target object according to a missing detection duration, so that missing detection is performed on the target object in the second perception result for a corresponding duration. For example, the first perception result may include state information of the target object at each time point within a period of time, and then, state information of the target object within the missing detection duration will be removed from the second perception result, so that perception faults caused by performing missing detection on the target object within the missing detection duration by using the perception algorithm are simulated. For another example, the first perception result may include a longitudinal distance from each of the target object to the ego vehicle, error injection is performed on longitudinal distances of the target object according to the above-mentioned determined longitudinal distance error value to obtain the second perception result. For example, the longitudinal distance in the first perception results is x1, and the longitudinal distance error value is △x1, then, the longitudinal distance in the second perception results is x1+△x1. Based on this, the second perception result of the target object corresponding to each of the perception performance indicator values, or the second perception results corresponding to the target object at each of the perception performance indicator values may be obtained.

In the present embodiment, by determining the at least one perception performance indicator value, it is convenient to perform perception fault injection on the first perception result of the target object to obtain the second perception result at each of the perception performance indicator values, and when the preset vehicle function is verified, the tolerance of the preset vehicle function to the perception performance indicator value may be determined.

In some optional embodiments, perception fault injection may be performed on first perception results of dynamic or static target object in following modes:
1. Long-time missing detection for target object: the target object perceived in the first perception result is continuously discarded for a missing detection duration, and the fault injection is ended after the missing detection duration is reached.
2. Short-time high-frequency missing detection for target object: the target object perceived in the first perception result is discarded at a certain missing detection frequency for the corresponding missing detection duration every time.
3. Long-time false detection for target object: continuous false detection perception fault injection is performed on the target object perceived in the first perception result, and the fault injection is ended after a false detection duration is reached. For example, the state information that the target object is perceived is increased in a false detection duration in an original time period when the target object are not perceived in the first perception result, so that perception faults of false detection for the target object is simulated.
4. Short-time high-frequency false detection for target object: short-time high-frequency false detection perception fault injection is performed on the first perception result.
5. Transverse and longitudinal distance errors of target object: transverse and longitudinal distance error faults are injected into transverse and longitudinal distances (including at least one of a transverse distance and a longitudinal distance) in the first perception result. For example, error perception fault injection is performed on a transverse distance from each of surrounding vehicles to the ego vehicle.
6. Transverse and longitudinal speed errors of target object: error perception faults are injected into transverse and longitudinal speeds (including at least one of a transverse speed and a longitudinal speed) in the first perception result. For example, error perception fault injection is performed on a longitudinal speed of a vehicle in front of the ego vehicle.
7. Orientation angle errors of target object: angle error perception fault injection is performed on orientation angles (i.e., postures or heading angles) in the first perception result.
8. Transverse distance error of lane line: error perception fault injection is performed on a transverse distance from the lane line to the ego vehicle.

During actual applications, more failure modes may be determined according to actual operation scenarios, and are used for verifying the preset vehicle function by perception fault injection of the in-loop simulation system to obtain the tolerance of the preset vehicle function to the perception performance index of the perception algorithm. The various abundant perception fault injection is beneficial to the obtaining of the tolerance of the preset vehicle function to more perception performance indexes of the perception algorithm, then, more accurate and effective perception performance thresholds may be provided for the development and maintenance of the perception algorithm, and the safety of the preset vehicle function is further improved.

In some optional embodiments, step 20341 of determining, based on the second perception result corresponding to the target object in the sub-mode, the second perception result information corresponding to the operation scenario in the sub-mode includes:
Step 203411: for any sub-mode, determining, based on the second perception result of the target object corresponding to the perception performance indicator value, the second perception result information corresponding to the perception performance indicator value.
Step 204 of verifying the preset vehicle function based on the second perception result information to obtain a verification result includes:
Step 2041b, determining, based on the second perception result information corresponding to the perception performance indicator value, a function response state corresponding to the preset vehicle function at the perception performance indicator value.

A specific operation principle that the function response state of the preset vehicle function is determined based on each of the second perception result information corresponding to any perception performance indicator value may refer to that in the previously-mentioned embodiment, and will be no longer repeated herein.

Step 2042b, determining a perception performance threshold of the preset vehicle function in the sub-mode based on the function response state corresponding to the preset vehicle function at the perception performance indicator value.

Each of the sub-modes may include one or more perception performance indicator values. Therefore, the perception performance threshold of the preset vehicle function in the sub-mode may be determined in combination with the function response state of the preset vehicle function at each of the perception performance indicator values.

Step 2043b, determining, based on the perception performance threshold corresponding to the preset vehicle function in the sub-mode, a perception performance threshold of the preset vehicle function in the operation scenario as the verification result.

A specific operation principle of step 2043b may refer to the previously-mentioned embodiment, and will be no longer repeated herein.

In the present embodiment, by verifying the preset vehicle function based on the second perception result information corresponding to each of the perception performance indicator values in each of the sub-modes, the function response state of the preset vehicle function to each of the perception performance indicator values may be obtained, so that the perception performance threshold which may be allowed by the preset vehicle function may be accurately obtained by traversing and verifying the perception performance indicator values, and the determination efficiency and accuracy of the perception performance threshold are further improved.

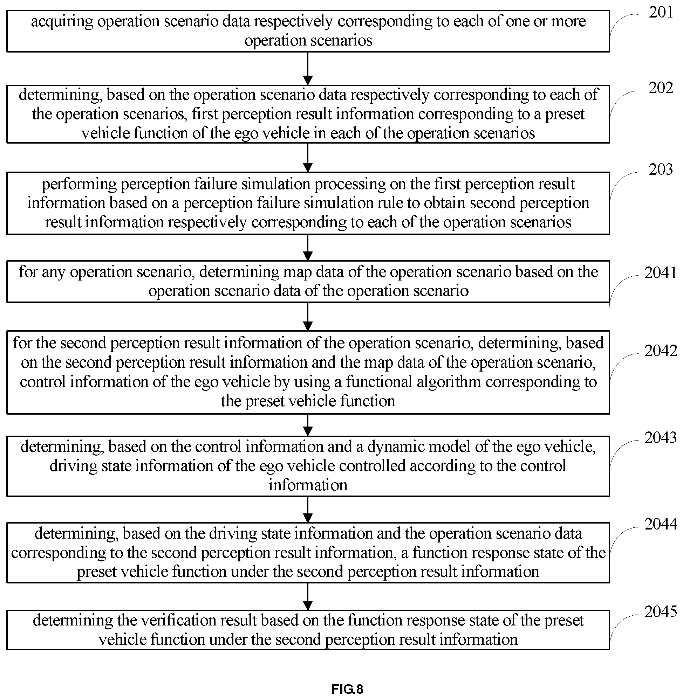

Fig. 8 is a schematic flow diagram of a method for verifying a vehicle function provided in yet further another exemplary embodiment of the present disclosure.

In some optional embodiments, step 204 of verifying the preset vehicle function based on the second perception result information to obtain a verification result includes:
Step 2041, for any operation scenario, determining map data of the operation scenario based on the operation scenario data of the operation scenario.

The map data may include at least one of positioning data, navigation data and high-precision map data. The map data may assist planning-control software in planning and controlling so as to provide a better simulation environment for planning and controlling and more effectively simulate a working situation of the planning-control software in a real scenario.

Step 2042, for the second perception result information of the operation scenario, determining, based on the second perception result information and the map data of the operation scenario, control information of the ego vehicle by using a functional algorithm corresponding to the preset vehicle function.

The functional algorithm corresponding to the preset vehicle function is an application software algorithm for achieving the preset vehicle function, and is used for calculating the control information of the ego vehicle based on the second perception result information, the map data, etc. For example, after the AEB function is triggered, the control information of the ego vehicle, such as a decelerated speed, may be calculated, a deceleration control instruction is sent to the ego vehicle, and the ego vehicle performs the deceleration control instruction for braking to achieve automatic emergency braking. The control information may include at least one of transverse control information, longitudinal control information, etc. For example, the control information may include a transverse accelerated speed, a longitudinal accelerated speed, an angle, etc.

Step 2043: determining, based on the control information and a dynamic model of the ego vehicle, driving state information of the ego vehicle controlled according to the control information.

The dynamic model of the vehicle is used for simulating a driving track of the vehicle controlled according to the control information. The driving state information of the ego vehicle controlled according to the control information may be determined based on the control information of the ego vehicle and the dynamic model of the vehicle. The driving state information may include state information, such as a position, a posture, a speed, an accelerated speed, and an angular speed, of the ego vehicle controlled according to the control information at one or more trajectory points (or time points) within a period of time in the future.

Step 2044: determining, based on the driving state information and the operation scenario data corresponding to the second perception result information, a function response state of the preset vehicle function under the second perception result information.

Driving tracks of other object around the ego vehicle within a period of time in the future may be determined based on the operation scenario data corresponding to the second perception result information, it may also be determined, in combination with the driving state information of the ego vehicle and the driving tracks of other object, whether the change of a relative relationship between the ego vehicle and each of other object achieves an expected result, such as whether the AEB function achieves the successful brake of the ego vehicle, and whether the HWP function achieves successful obstacle avoidance during vehicle cut-in. If the expected result may be achieved, it is determined that the function response state is shown as success; and if the expected result may not be achieved, it is determined that the function response state is shown as failure.

Step 2045: determining the verification result based on the function response state of the preset vehicle function under the second perception result information.

A specific operation principle of step 2045 may refer to the previously-mentioned embodiment, and will be no longer repeated herein.

In the present embodiment, the preset vehicle function is further verified in combination with the map data and the dynamic mode of the vehicle, which is beneficial to the further improvement of the accuracy of the verification result.

In some optional embodiments, step 2044 of determining, based on the driving state information and the operation scenario data corresponding to the second perception result information, a function response state of the preset vehicle function under the second perception result information includes:
determining, based on the driving state information and the operation scenario data corresponding to the second perception result information, a state of an expected result of the ego vehicle under the preset vehicle function; in response to the state of the expected result being achieved, determining the function response state of the preset vehicle function under the second perception result information as success; or in response to the state of the expected result being unachieved, determining the function response state of the preset vehicle function under the second perception result information as failure.

The expected result may be set according to a functional safety goal of the preset vehicle function. For example, the AEB function achieves successful brake, and the HWP function achieves successful obstacle avoidance. It may be determined, in combination with the driving state information of the ego vehicle controlled according to the control information and the driving tracks of other object in the operation scenario data, whether collision between the ego vehicle and each of other object occurs, the ego vehicle successfully avoids obstacles, the minimum longitudinal distance from the ego vehicle to each of the target object is greater than the minimum longitudinal safety distance threshold, and the minimum transverse distance from the ego vehicle to each of the target object is greater than the minimum transverse safety distance threshold, and thus, a state of the expected result of the ego vehicle under the preset vehicle function may be determined. If the expected result may be achieved, it is determined that the function response state of the preset vehicle function is shown as success; and if the expected result may not be achieved, it is determined that the function response state is shown as failure.

Any method for verifying a vehicle function provided in the embodiments of the present disclosure may be performed by any appropriate device with data processing capacity, including, but not limited to a terminal device and a server. Or, any method for verifying a vehicle function provided in the embodiments of the present disclosure may be performed by a processor, for example, the processor performs any method for verifying a vehicle function mentioned in the embodiments of the present disclosure by calling a corresponding instruction stored in a memory, which will be no longer repeated hereinafter.

### Exemplary apparatus

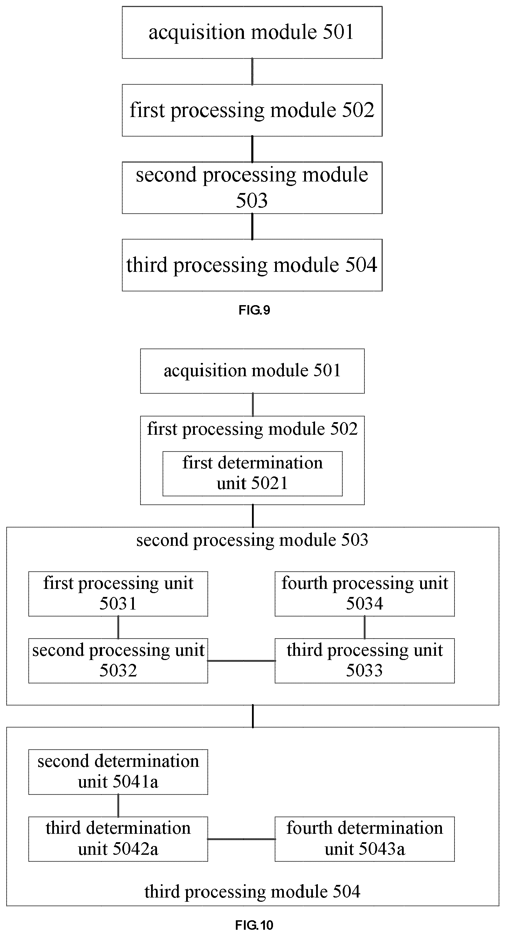

Fig. 9 is a schematic structural diagram of an apparatus for verifying a vehicle function provided in one exemplary embodiment of the present disclosure. The apparatus in the embodiment may be used for achieving the corresponding embodiment of the method for verifying a vehicle function in the present disclosure. The apparatus shown in Fig. 9 includes an acquisition module 501, a first processing module 502, a second processing module 503, and a third processing module 504.

The acquisition module 501 is configured to acquire operation scenario data respectively corresponding to each of one or more operation scenarios, the operation scenario data comprising state information and surrounding environmental information of an ego vehicle.

The first processing module 502 is configured to determine, based on the operation scenario data respectively corresponding to each of the operation scenarios, first perception result information corresponding to a preset vehicle function of the ego vehicle in each of the operation scenarios.

The second processing module 503 is configured to perform perception failure simulation processing on the first perception result information based on a perception failure simulation rule to obtain second perception result information respectively corresponding to each of the operation scenarios.

The third processing module 504 is configured to verify the preset vehicle function based on the second perception result information to obtain a verification result.

Fig. 10 is a schematic structural diagram of an apparatus for verifying a vehicle function provided in another exemplary embodiment of the present disclosure.

In some optional embodiments, the first perception result information includes first perception result of at least one object around the ego vehicle. The second processing module 503 includes:
a first processing unit 5031 configured to, for any operation scenario of all the operation scenarios, determine, based on the first perception result information in the operation scenario, a target object meeting a first condition;
a second processing unit 5032 configured to determine, based on the perception failure simulation rule, a failure mode corresponding to the target object;
a third processing unit 5033 configured to perform perception failure simulation processing on the first perception result of the target object based on the failure mode to obtain second perception result of perception failure of the target object; and
a fourth processing unit 5034 configured to determine, based on the second perception result of the target object, the second perception result information corresponding to the operation scenario.

In some optional embodiments, the first processing module 502 includes:
a first determination unit 5021 configured to, for any operation scenario, determine first perception result information of the ego vehicle at one or more trajectory points in the operation scenario based on the operation scenario data corresponding to the operation scenario.

The first processing unit 5031 is specifically configured to, for any operation scenario, determine, based on the first perception result information corresponding to each of the trajectory points, the target object in different areas around the ego vehicle.

In some optional embodiments, the third processing module 504 is specifically configured to:
determine, based on the second perception result information, a perception performance threshold corresponding to the preset vehicle function in each of the different areas around the ego vehicle, and to take the perception performance threshold corresponding to the preset vehicle function in each of the different areas around the ego vehicle as the verification result.

In some optional embodiments, the failure modes include at least one type of sub-mode.

In some optional embodiments, the third processing unit 5033 is specifically configured to:
for any sub-mode, perform perception failure simulation processing on the first perception result of the target object based on a simulation sub-rule corresponding to the sub-mode to obtain the second perception results of the target object in the sub-mode.

The fourth processing unit 5034 is specifically configured to:
determine, based on the second perception result corresponding to the target object in each of the sub-modes, the second perception result information corresponding to the operation scenario in each of the sub-modes.

In some optional embodiments, the third processing module 504 includes:
a second determination unit 5041a configured to determine a function response state of the preset vehicle function in each of the sub-modes of the operation scenario based on the second perception result information corresponding to the operation scenario in each of the sub-modes;
a third determination unit 5042a configured to determine a perception performance threshold of the preset vehicle function in the operation scenario based on the function response state of the preset vehicle function in each of the sub-modes of the operation scenario; and
a fourth determination unit 5043a configured to determine, based on the perception performance threshold of the preset vehicle function in each of the operation scenarios, a target perception performance threshold corresponding to the preset vehicle function, and take the target perception performance threshold as the verification result.

In some optional embodiments, the third processing unit 5033 is specifically configured to:
determine at least one perception performance indicator value based on the simulation sub-rule corresponding to the sub-mode; and update the first perception result of the target object based on each of the perception performance indicator values to obtain the second perception result, corresponding to each of the perception performance indicator values, of the target object.

In some optional embodiments, the fourth processing unit 5034 is specifically configured to:
for any sub-mode, determine, based on the second perception result, corresponding to each of the perception performance indicator values, of the target object, the second perception result information corresponding to each of the perception performance indicator values.

The third processing module 504 is specifically configured to:
determine, based on the second perception result information corresponding to each of the perception performance indicator values, a function response state corresponding to the preset vehicle function at each of the perception performance indicator values; determine a perception performance threshold of the preset vehicle function in the sub-mode based on the function response state corresponding to the preset vehicle function at each of the perception performance indicator values; and determine a perception performance threshold of the preset vehicle function in the operation scenario based on the perception performance threshold corresponding to the preset vehicle function in each of the sub-modes, and take the perception performance threshold of the preset vehicle function in the operation scenario as the verification result.

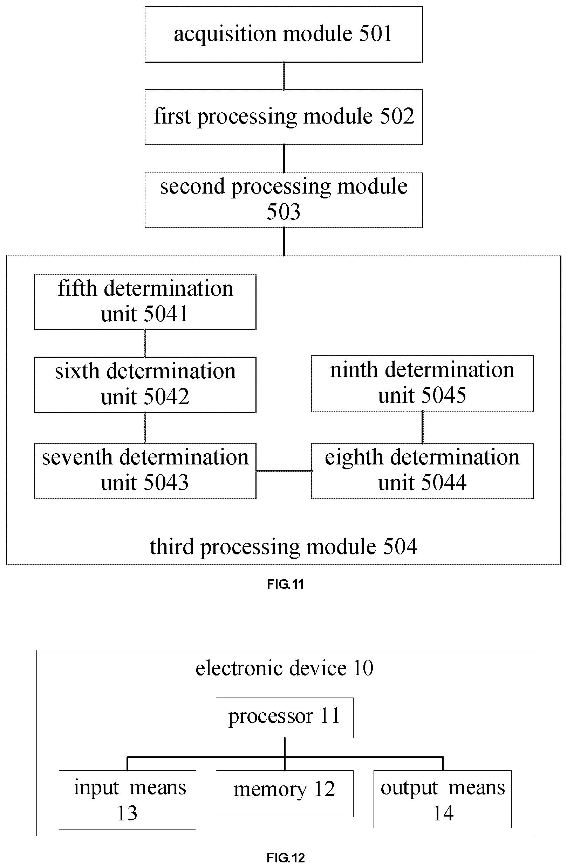

Fig. 11 is a schematic structural diagram of an apparatus for verifying a vehicle function provided in further exemplary embodiment of the present disclosure.

In some optional embodiments, the third processing module 504 includes:
a fifth determination unit 5041 configured to, for any operation scenario, determine map data of the operation scenario based on the operation scenario data of the operation scenario;
a sixth determination unit 5042 configured to, for any one of the second perception result information of the operation scenario, determine, based on the second perception result information and the map data of the operation scenario, control information of the ego vehicle by using a functional algorithm corresponding to the preset vehicle function;
a seventh determination unit 5043 configured to determine, based on the control information of the ego vehicle and a dynamic model of a vehicle, driving state information of the ego vehicle controlled according to the control information;
an eighth determination unit 5044 configured to determine a function response state of the preset vehicle function under the second perception result information based on the driving state information and the operation scenario data corresponding to the second perception result information; and
a ninth determination unit 5045 configured to determine the verification result based on the function response state of the preset vehicle function under the second perception result information.

In some optional embodiments, the eighth determination unit 5044 is specifically configured to:
determine a state of an expected result of the ego vehicle under the preset vehicle function based on the driving state information and the operation scenario data corresponding to the second perception result information; in response to the state of the expected result being achieved, determine the function response state of the preset vehicle function under the second perception result information as success; or in response to the state of the expected result being unachieved, determine the function response state of the preset vehicle function under the second perception result information as failure.

The beneficial technical effects corresponding to the exemplary embodiments of the present apparatus may refer to the corresponding beneficial technical effects of the above-mentioned exemplary method, and will be no longer repeated herein.

### Exemplary electronic device

Fig. 12 is a structural diagram of an electronic device provided in an embodiment of the present disclosure, and the electronic device includes at least one processor 11 and a memory 12.

The processor 11 may be a central processing unit (CPU) or other forms of processing units with data processing capabilities and/or instruction execution capabilities, and may control other components in the electronic device 10 to execute expected functions.

The memory 12 may include one or more computer program products which may include various forms of computer-readable storage media, such as a volatile memory and/or a nonvolatile memory. The volatile memory may include a random access memory (RAM) and/or a cache memory, etc. The nonvolatile memory may include a read-only memory (ROM), a hard disk, a flash memory, etc. The computer-readable storage media may store one or more computer program instructions, and the one or more computer program instructions may run on the processor 11 to implement the method in the embodiments of the present disclosure mentioned above and/or other expected functions.

In an example, the electronic device 10 may further include an input means 13 and an output means 14, and these components are interconnected by a bus system and/or other forms of connecting mechanisms (unshown).

The input means 13 may further include a keyboard, a mouse, etc.

The output means 14 may output various information to the outside of the electronic device 10, and may include a display, a loudspeaker, a printer, a communication network, a remote output device connected by the communication network, etc.

Of course, for simplification, Fig. 12 only shows some of components related to the present disclosure in the electronic device 10, and omits components such as a bus and an input/output interface. Besides, the electronic device 10 may further include any other appropriate components according to specific application situations.

### Exemplary computer program and computer-readable storage medium

In addition to the above-mentioned method and device, an embodiment of the present disclosure further provides a computer program product, including a computer program instruction, wherein the computer program instruction, when running on the processor, enables the processor to perform the steps of the method in the various embodiments of the present disclosure described in the above-mentioned "exemplary method".

The computer program product may be used for compiling program codes for performing operations in the embodiments of the present disclosure by using any combinations of one or more programming languages, and the programming languages include object-oriented programming languages, such as Java and C++, and further include conventional procedural programming languages, such as "C" languages or similar programming languages. The program codes may be completely executed on a user computation device, partially executed on user equipment, executed as an independent software package, partially executed on the user computation device and partially executed on a remote computation device, or completely executed on the remote computation device or a server.

In addition, an embodiment of the present disclosure may further include a computer-readable storage medium, on which a computer program is stored, wherein the computer program instruction, when running on a processor, enables the processor to perform the steps of the method in the various embodiments of the present disclosure described in the above-mentioned "exemplary method".

The computer-readable storage medium may adopt one or any combinations of more readable media. The readable medium may be a readable signal medium or a readable storage medium. The readable storage medium includes, but is not limited to including an electric, magnetic, optical, electromagnetic, infrared or semiconductor system, apparatus or devices or any combinations thereof. More specific examples (non-exhaustive list) of the readable storage medium include electric connectors with one or more conducting wires, a portable disk, a hard disk, a random access memory (RAM), a read-only memory (ROM), an erasable programmable read-only memory (EPROM or a flash memory), an optical fiber, a portable compact disc read-only memory (CD-ROM), an optical storage device, a magnetic storage device, or any appropriate combinations thereof.

A basic principle of the present disclosure has been described above in conjunction with the specific embodiments. However, the advantages, superiorities, effects, etc. mentioned in the present disclosure are only exemplary, rather than restrictive, and should not be considered that it is necessary for each embodiment of the present disclosure. In addition, the specific details disclosed as above are only for the purposes of giving examples and facilitating understanding, rather than restrictions, and the above-mentioned details do not limit the present disclosure to be necessarily achieved by adopting the above-mentioned specific details.

The skilled in the art may make various alterations and variations on the present disclosure without departing from the scope of the present invention as defined by the appended claims. In this way, if these alterations and variations of the present application fall within the scope of the claims, the present invention is also intended to include these alterations and variations.

## Claims

1. A method for verifying a vehicle function, **characterized in** comprising:
acquiring (201) operation scenario data respectively corresponding to each of one or more operation scenarios, the operation scenario data comprising state information of an ego vehicle and surrounding environmental information of the ego vehicle, wherein the operation scenario data is configured to assist in simulating real operation scenarios to perform operation scenario simulation;
determining (202), based on the operation scenario data respectively corresponding to each of the operation scenarios, first perception result information corresponding to a preset vehicle function of the ego vehicle in each of the operation scenarios, wherein the first perception result information is determined based on states of the ego vehicle and surrounding objects in a simulated operation scenario;
performing (203) perception failure simulation processing on the first perception result information based on a perception failure simulation rule to obtain second perception result information respectively corresponding to each of the operation scenarios, wherein the perception failure simulation processing includes perception failure simulation processing for different durations and/or at different frequencies; and
verifying (204) the preset vehicle function based on the second perception result information to obtain a verification result, wherein the verification result includes at least one of a function response state of the preset vehicle function under the second perception result information and a perception performance threshold of a perception algorithm allowed by the preset vehicle function, and wherein the perception performance threshold includes a duration threshold and/or a frequency threshold for the perception failure simulation processing.

2. The method according to claim 1, wherein the first perception result information comprises a first perception result of at least one object around the ego vehicle; and
the performing (203) perception failure simulation processing on the first perception result information based on a perception failure simulation rule to obtain second perception result information respectively corresponding to each of the operation scenarios comprises:
for any of the operation scenarios, determining (2031), based on the first perception result information in the operation scenario, a target object meeting a first condition;
determining (2032), based on the perception failure simulation rule, a failure mode corresponding to the target object;
performing (2033) perception failure simulation processing on the first perception result of the target object based on the failure mode to obtain a second perception result of perception failure of the target object; and
determining (2034), based on the second perception result of the target object, the second perception result information corresponding to the operation scenario.

3. The method according to claim 2, wherein the failure mode comprises at least one type of sub-mode; and for any sub-mode,
the performing (2033) perception failure simulation processing on the first perception result of the target object based on the failure mode to obtain a second perception result of perception failure of the target object comprises:
performing (20331) perception failure simulation processing on the first perception result of the target object based on a simulation sub-rule corresponding to the sub-mode to obtain the second perception result of the target object in the sub-mode; and
the determining (2034), based on the second perception result of the target object, the second perception result information corresponding to the operation scenario comprise:
determining (20341), based on the second perception result corresponding to the target object in the sub-mode, the second perception result information corresponding to the sub-mode in the operation scenario.

4. The method according to any one of claims 1 to 3, wherein the verifying (204) the preset vehicle function based on the second perception result information to obtain a verification result comprises:
determining (2041a), based on the second perception result information corresponding to the sub-mode in the operation scenario, a function response state of the preset vehicle function in the sub-mode of the operation scenario;
determining (2042a), based on the function response state of the preset vehicle function in the sub-mode of the operation scenario, a perception performance threshold of the preset vehicle function in the operation scenario; and
determining (2043a), based on the perception performance threshold of the preset vehicle function in the operation scenario, a target perception performance threshold corresponding to the preset vehicle function as the verification result.

5. The method according to claim3 or claim 4 when dependent on claim 3, wherein the performing (20331) perception failure simulation processing on the first perception result of the target object based on a simulation sub-rule corresponding to the sub-mode to obtain the second perception result of the target object in the sub-mode comprises:
determining (203311) at least one perception performance indicator value based on the simulation sub-rule corresponding to the sub-mode; and
for any perception performance indicator value, updating (203311) the first perception result of the target object base on the perception performance indicator value to obtain the second perception result of the target object corresponding to the perception performance indicator value.

6. The method according to claim 3 or any one of claims 4 to 5 when dependent on claim 3, wherein for any sub-mode, the determining (20341), based on the second perception result corresponding to the target object in the sub-mode, the second perception result information corresponding to the sub-mode in the operation scenario comprises:
determining (203411), based on the second perception result of the target object corresponding to the perception performance indicator value, the second perception result information corresponding to the perception performance indicator value; and
the verifying the preset vehicle function based on the second perception result information to obtain a verification result comprises:
determining (2041b), based on the second perception result information corresponding to the perception performance indicator value, a function response state corresponding to the preset vehicle function at the perception performance indicator value;
determining (2042b) a perception performance threshold of the preset vehicle function in the sub-mode based on the function response state corresponding to the preset vehicle function at the perception performance indicator value; and
determining (2043b), based on the perception performance threshold corresponding to the preset vehicle function in the sub-mode, a perception performance threshold of the preset vehicle function in the operation scenario as the verification result.

7. The method according to any one of claims 2 to 6, wherein the determining (202), based on the operation scenario data respectively corresponding to each of the operation scenario, first perception result information corresponding to a preset vehicle function of the ego vehicle in each of the operation scenarios comprises:
for any operation scenario, determining (2021), based on the operation scenario data corresponding to the operation scenario, first perception result information of the ego vehicle at at least one trajectory point in the operation scenario; and
the determining (2031), based on the first perception result information in the operation scenario, a target object meeting a first condition comprises:
determining (20311), based on the first perception result information corresponding to the trajectory point, the target object in different areas around the ego vehicle.

8. The method according to any one of claims 1 to 7, wherein the verifying (204) the preset vehicle function based on the second perception result information to obtain a verification result comprises:
determining (204A), based on the second perception result information, a perception performance threshold corresponding to the preset vehicle function in each of the different areas around the ego vehicle; and
taking (204B) the perception performance threshold corresponding to the preset vehicle function in each of the different areas around the ego vehicle as the verification result.

9. The method according to any one of claims 1 to 6, wherein the verifying (204) the preset vehicle function based on the second perception result information to obtain a verification result comprises:
for any operation scenario, determining (2041) map data of the operation scenario based on the operation scenario data of the operation scenario;
determining (2042), based on the second perception result information and the map data of the operation scenario, control information of the ego vehicle by using a functional algorithm corresponding to the preset vehicle function;
determining (2043), based on the control information and a dynamic model of the ego vehicle, driving state information of the ego vehicle controlled according to the control information;
determining (2044), based on the driving state information and the operation scenario data corresponding to the second perception result information, the function response state of the preset vehicle function under the second perception result information; and
determining (2045) the verification result based on the function response state of the preset vehicle function under the second perception result information.

10. The method according to claim 9, wherein the determining (2044), based on the driving state information and the operation scenario data corresponding to the second perception result information, the function response state of the preset vehicle function under the second perception result information comprises:
determining, based on the driving state information and the operation scenario data corresponding to the second perception result information, a state of an expected result of the ego vehicle under the preset vehicle function;
in response to the state of the expected result being achieved, determining the function response state of the preset vehicle function under the second perception result information as success; or
in response to the state of the expected result being unachieved, determining the function response state of the preset vehicle function under the second perception result information as failure.

11. An apparatus for verifying a vehicle function, **characterized in** comprising:
an acquisition module (501) configured to acquire operation scenario data respectively corresponding to each of one or more operation scenarios, the operation scenario data comprising state information of an ego vehicle and surrounding environmental information of the ego vehicle, wherein the operation scenario data is configured to assist in simulating real operation scenarios to perform operation scenario simulation;
a first processing module (502) configured to determine, based on the operation scenario data respectively corresponding to each of the operation scenarios, first perception result information corresponding to a preset vehicle function of the ego vehicle in each of the operation scenarios, wherein the first perception result information is determined based on states of the ego vehicle and surrounding objects in a simulated operation scenario;
a second processing module (503) configured to perform perception failure simulation processing on the first perception result information based on a perception failure simulation rule to obtain second perception result information respectively corresponding to each of the operation scenarios, wherein the perception failure simulation processing includes perception failure simulation processing for different durations and/or at different frequencies; and
a third processing module (504) configured to verify the preset vehicle function based on the second perception result information to obtain a verification result, wherein the verification result includes at least one of a function response state of the preset vehicle function under the second perception result information and a perception performance threshold of a perception algorithm allowed by the preset vehicle function, and wherein the perception performance threshold includes a duration threshold and/or a frequency threshold for the perception failure simulation processing.

12. The apparatus according to claim 11, wherein the second processing module (503) comprises:
a first processing unit (5031) configured to, for any operation scenario, determine, based on the first perception result information in the operation scenario, a target object meeting a first condition;
a second processing unit (5032) configured to determine, based on the perception failure simulation rule, a failure mode corresponding to the target object;
a third processing unit (5033) configured to perform perception failure simulation processing on the first perception result of the target object based on the failure mode to obtain a second perception result of perception failure of the target object; and
a fourth processing unit (5034) configured to determine, based on the second perception result of the target object, the second perception result information corresponding to the operation scenario.

13. The apparatus according to claim 11, wherein the first processing module (502) comprises:
a first determination unit (5021) configured to, for any operation scenario, determine first perception result information of the ego vehicle at at least one trajectory point in the operation scenario based on the operation scenario data corresponding to the operation scenario.

14. A computer-readable storage medium, **characterized in that** the storage medium stores a computer program that, when executed by a processor, implements the method for verifying a vehicle function according to any of claims 1 to 10.

15. An electronic device, comprising:
a processor (11); and
a memory (12) configured to store an executable instruction;
**characterized in that** the processor is configured to read the executable instruction from the memory and execute the instruction to implement the method for verifying a vehicle function according to any one of claims 1 to 10.

## Patentansprüche

1. Verfahren zur Überprüfung einer Fahrzeugfunktion, **dadurch gekennzeichnet, dass** es umfasst:
Erfassen (201) von Betriebsszenario-Daten, die jeweils einem oder mehreren Betriebsszenarien entsprechen, wobei die Betriebsszenario-Daten Zustandsinformationen eines eigenen Fahrzeugs und Umgebungsinformationen des eigenen Fahrzeugs umfassen, wobei die Betriebsszenario-Daten dazu konfiguriert sind, bei der Simulation realer Betriebsszenarien zur Durchführung einer Betriebsszenario-Simulation zu unterstützen;
Ermitteln (202) von ersten Wahrnehmungsergebnisinformationen, die einer voreingestellten Fahrzeugfunktion des eigenen Fahrzeugs in jedem der Betriebsszenarien entsprechen, auf der Grundlage der Betriebsszenariodaten, die jeweils jedem der Betriebsszenarien entsprechen, wobei die ersten Wahrnehmungsergebnisinformationen auf der Grundlage von Zuständen des eigenen Fahrzeugs und von Objekten in der Umgebung in einem simulierten Betriebsszenario ermittelt werden;
Durchführen (203) einer Wahrnehmungsausfall-Simulationsverarbeitung an den ersten Wahrnehmungsergebnisinformationen auf der Grundlage einer Wahrnehmungsausfall-Simulationsregel, um zweite Wahrnehmungsergebnisinformationen zu erhalten, die jeweils jedem der Betriebsszenarien entsprechen, wobei die Wahrnehmungsausfall-Simulationsverarbeitung eine Wahrnehmungsausfall-Simulationsverarbeitung für unterschiedliche Dauer und/oder mit unterschiedlichen Frequenzen umfasst; und
Überprüfen (204) der voreingestellten Fahrzeugfunktion auf der Grundlage der zweiten Wahrnehmungsergebnisinformation, um ein Überprüfungsergebnis zu erhalten, wobei das Überprüfungsergebnis mindestens einen der folgenden Punkte umfasst: einen Funktionsreaktionszustand der voreingestellten Fahrzeugfunktion unter Berücksichtigung der zweiten Wahrnehmungsergebnisinformation und/oder einen von der voreingestellten Fahrzeugfunktion zugelassenen Wahrnehmungsleistungsschwellenwert eines Wahrnehmungsalgorithmus, und wobei der Wahrnehmungsleistungsschwellenwert einen Dauer-Schwellenwert und/oder einen Häufigkeitsschwellenwert für die Simulation einer Wahrnehmungsstörung bzw. eines Wahrnehmungsausfalls umfasst.

2. Verfahren gemäß Anspruch 1, wobei die erste Wahrnehmungsergebnisinformation ein erstes Wahrnehmungsergebnis mindestens eines Objekts in der Umgebung des Eigenfahrzeugs umfasst; und
das Durchführen (203) einer Wahrnehmungsausfall- bzw. Erkennungsausfall-Simulationsverarbeitung an den ersten Wahrnehmungsergebnisinformationen auf der Grundlage einer Wahrnehmungsausfall-Simulationsregel, um zweite Wahrnehmungsergebnisinformationen zu erhalten, die jeweils einem der Betriebsszenarien entsprechen, umfasst:
für jedes der Betriebsszenarien das Bestimmen (2031) eines Zielobjekts, das eine erste Bedingung erfüllt, auf der Grundlage der ersten Wahrnehmungsergebnisinformationen in dem Betriebsszenario;
das Bestimmen (2032) eines dem Zielobjekt entsprechenden Ausfallmodus auf der Grundlage der Simulationsregel für Wahrnehmungsausfälle;
Durchführen (2033) eines Wahrnehmungsausfall-Simulationsvorgangs für das erste Wahrnehmungsergebnis des Zielobjekts auf der Grundlage des Ausfallmodus, um ein zweites Wahrnehmungsergebnis eines Wahrnehmungsausfalls des Zielobjekts zu erhalten; und
Ermitteln (2034) der dem Betriebsszenario entsprechenden zweiten Wahrnehmungsergebnisinformation auf der Grundlage des zweiten Wahrnehmungsergebnisses des Zielobjekts.

3. Verfahren gemäß Anspruch 2, wobei der Fehlermodus mindestens eine Art von Untermodus umfasst; und für jeden Untermodus
das Durchführen (2033) eines Wahrnehmungsausfall-Simulationsvorgangs für das erste Wahrnehmungsergebnis des Zielobjekts auf der Grundlage des Ausfallmodus, um ein zweites Wahrnehmungsergebnis eines Wahrnehmungsausfalls des Zielobjekts zu erhalten, umfasst:
Durchführen (20331) eines Wahrnehmungsausfall-Simulationsvorgangs für das erste Wahrnehmungsergebnis des Zielobjekts auf der Grundlage einer dem Untermodus entsprechenden Simulations-Unterregel, um das zweite Wahrnehmungsergebnis des Zielobjekts in dem Untermodus zu erhalten; und
das Bestimmen (2034) der dem Betriebsszenario entsprechenden zweiten Wahrnehmungsergebnisinformation auf der Grundlage des zweiten Wahrnehmungsergebnisses des Zielobjekts umfasst:
das Bestimmen (20341) der in dem Untermodus im Betriebsszenario entsprechenden zweiten Wahrnehmungsergebnisinformation auf der Grundlage des in dem Untermodus entsprechenden zweiten Wahrnehmungsergebnisses.

4. Verfahren gemäß Anspruch 1 bis 3, wobei das Überprüfen (204) der voreingestellten Fahrzeugfunktion auf der Grundlage der zweiten Wahrnehmungsergebnisinformationen, um ein Überprüfungsergebnis zu erhalten, umfasst:
Ermitteln (2041a) eines Funktionsreaktionszustands der voreingestellten Fahrzeugfunktion in dem Untermodus des Betriebsszenarios auf der Grundlage der zweiten Wahrnehmungsergebnisinformation, die dem Untermodus in dem Betriebsszenario entspricht;
Ermitteln (2042a) eines Wahrnehmungsleistungsschwellenwerts der voreingestellten Fahrzeug sfunktion in dem Betriebsszenario auf der Grundlage des Funktionsreaktionszustands der voreingestellten Fahrzeugfunktion im Untermodus des Betriebsszenarios; und
Ermitteln (2043a) eines der voreingestellten Fahrzeugfunktion entsprechenden Zielschwellenwerts für die Wahrnehmungsleistung auf der Grundlage des Schwellenwerts für die Wahrnehmungsleistung der voreingestellten Fahrzeugfunktion in dem Betriebsszenario als Verifizierungs- bzw. Überprüfungsergebnis.

5. Verfahren gemäß Anspruch 3 oder 4, soweit auf Anspruch 3 zurückbezogen, wobei das Durchführen (20331) eines Wahrnehmungsausfall-Simulationsvorgangs für das erste Wahrnehmungsergebnis des Zielobjekts auf der Grundlage einer dem Untermodus entsprechenden Simulations-Teilregel, um das zweite Wahrnehmungsergebnis des Zielobjekts in dem Untermodus zu erhalten, umfasst:
Ermitteln (203311) mindestens eines Wertes eines Wahrnehmungsleistungsindikators auf der Grundlage der dem Untermodus entsprechenden Simulations-Teilregel; und
für jeden Wahrnehmungsleistungsindikatorwert das Aktualisieren (203311) des ersten Wahrnehmungsergebnisses des Zielobjekts auf der Grundlage des Wahrnehmungsleistungsindikatorwerts, um das dem Wahrnehmungsleistungsindikatorwert entsprechende zweite Wahrnehmungsergebnis des Zielobjekts zu erhalten.

6. Verfahren gemäß Anspruch 3 oder einem der Ansprüche 4 bis 5, sofern dieser von Anspruch 3 abhängt, wobei für jeden Untermodus das Ermitteln (20341) der in dem Untermodus im Betriebsszenario entsprechenden zweiten Wahrnehmungsergebnisinformation auf der Grundlage des dem Zielobjekt im Untermodus entsprechenden zweiten Wahrnehmungsergebnisses umfasst:
Ermitteln (203411) der dem Wert des Wahrnehmungsleistungsindikators entsprechenden zweiten Wahrnehmungsergebnisinformation auf der Grundlage des dem Zielobjekt im Untermodus entsprechenden zweiten Wahrnehmungsergebnisses; und
das Überprüfen der voreingestellten Fahrzeugfunktion auf der Grundlage der zweiten Wahrnehmungsergebnisinformation, um ein Überprüfungsergebnis zu erhalten, umfasst:
Ermitteln (2041b) eines Funktionsreaktionszustands, der der voreingestellten Fahrzeugfunktion bei dem Wert des Wahrnehmungsleistungsindikators entspricht, auf der Grundlage der dem Wert des Wahrnehmungsleistungsindikators entsprechenden zweiten Wahrnehmungsergebnisinformation;
das Bestimmen (2042b) eines Wahrnehmungsleistungsschwellenwerts der voreingestellten Fahrzeugfunktion im Untermodus auf der Grundlage des Funktionsreaktionszustands, der der voreingestellten Fahrzeugfunktion bei dem Wert des Wahrnehmungsleistungsindikators entspricht; und
Ermitteln (2043b) eines Wahrnehmungsleistungsschwellenwerts der voreingestellten Fahrzeugfunktion in dem Betriebsszenario als Verifizierungsergebnis auf der Grundlage des Wahrnehmungsleistungsschwellenwerts, der der voreingestellten Fahrzeugfunktion im Untermodus entspricht.

7. Verfahren gemäß Anspruch 2 bis 6, wobei das Bestimmen (202) auf der Grundlage der jeweils den einzelnen Betriebsszenarien entsprechenden Betriebsszenariodaten, von ersten Wahrnehmungsergebnisinformationen entsprechend einer voreingestellten Fahrzeugfunktion des Eigenfahrzeugs in jedem der Betriebsszenarien umfassen:
für jedes Betriebsszenario das Ermitteln (2021) von ersten Wahrnehmungsergebnisinformationen des Eigenfahrzeugs an mindestens einem Trajektorienpunkt in dem Betriebsszenario auf der Grundlage der dem Betriebsszenario entsprechenden Betriebsszenariodaten; und
das Ermitteln (2031) eines Zielobjekts, das eine erste Bedingung erfüllt, auf der Grundlage der ersten Wahrnehmungsergebnisinformationen in dem Betriebsszenario umfasst:
das Ermitteln (20311) des Zielobjekts in verschiedenen Bereichen um das eigene Fahrzeug herum auf der Grundlage der ersten Wahrnehmungsergebnisinformationen, die dem Trajektorienpunkt entsprechen.

8. Verfahren gemäß Anspruch 1 bis 7, wobei das Überprüfen (204) der voreingestellten Fahrzeugfunktion auf der Grundlage der zweiten Wahrnehmungsergebnisinformationen zum Erhalten eines Überprüfungsergebnisses umfasst:
Ermitteln (204A) eines der voreingestellten Fahrzeugfunktion entsprechenden Wahrnehmungsleistungsschwellenwerts in jedem der verschiedenen Bereiche um das eigene Fahrzeug herum auf der Grundlage der zweiten Wahrnehmungsergebnisinformationen; und
die Übernahme (204B) des der voreingestellten Fahrzeugfunktion entsprechenden Wahrnehmungsleistungsschwellenwerts in jedem der verschiedenen Bereiche um das eigene Fahrzeug herum als Überprüfungsergebnis.

9. Verfahren gemäß Anspruch 1 bis 6, wobei das Überprüfen (204) der voreingestellten Fahrzeugfunktion auf der Grundlage der zweiten Wahrnehmungsergebnisinformationen zur Ermittlung eines Überprüfungsergebnisses umfasst:
für jedes Betriebsszenario das Ermitteln (2041) von Kartendaten des Betriebsszenarios auf der Grundlage der Betriebsszenariodaten des Betriebsszenarios;
Ermitteln (2042) von Steuerungsinformationen des Eigenfahrzeugs auf der Grundlage der zweiten Wahrnehmungsergebnisinformationen und der Kartendaten des Betriebsszenarios unter Verwendung eines der voreingestellten Fahrzeugfunktion entsprechenden Funktionsalgorithmus;
Ermitteln (2043) von Fahrzustandsinformationen des Eigenfahrzeugs, das gemäß den Steuerungsinformationen gesteuert wird, auf der Grundlage der Steuerungsinformationen und eines dynamischen Modells des Eigenfahrzeugs;
Ermitteln (2044) des Funktionsreaktionszustands der voreingestellten Fahrzeugfunktion unter den zweiten Wahrnehmungsergebnisinformationen auf der Grundlage der Fahrzustandsinformationen und der Betriebsszenariodaten, die den zweiten Wahrnehmungsergebnisinformationen entsprechen; und
Ermitteln (2045) des Verifizierungsergebnisses auf der Grundlage des Funktionsreaktionszustands der voreingestellten Fahrzeugfunktion unter den zweiten Wahrnehmungsergebnisinformationen.

10. Verfahren gemäß Anspruch 9, wobei das Ermitteln (2044) des Funktionsreaktionszustands der voreingestellten Fahrzeugfunktion unter Berücksichtigung der zweiten Wahrnehmungsergebnisinformationen auf der Grundlage der Fahrzustandsinformationen und der den zweiten Wahrnehmungsergebnisinformationen entsprechenden Betriebsszenariodaten umfasst:
das Ermitteln eines Zustands eines erwarteten Ergebnisses des eigenen Fahrzeugs unter der voreingestellten Fahrzeugfunktion auf der Grundlage der Fahrzustandsinformationen und der Betriebsszenariodaten, die den zweiten Wahrnehmungsergebnisinformationen entsprechen;
als Reaktion darauf, dass der Zustand des erwarteten Ergebnisses erreicht ist, das Funktionsreaktionsverhalten der voreingestellten Fahrzeugfunktion unter den zweiten Wahrnehmungsergebnisinformationen als "Erfolg" zu bestimmen; oder
als Reaktion darauf, dass der Zustand des erwarteten Ergebnisses nicht erreicht wurde, Bestimmen des Funktionsreaktionszustands der voreingestellten Fahrzeugfunktion unter den zweiten Wahrnehmungsergebnisinformationen als "Fehlschlag".

11. Vorrichtung zur Überprüfung einer Fahrzeugfunktion, **dadurch gekennzeichnet, dass** sie umfasst:
ein Erfassungsmodul (501), das dazu konfiguriert ist, Betriebsszenariodaten zu erfassen, die jeweils einem oder mehreren Betriebsszenarien entsprechen, wobei die Betriebsszenariodaten Zustandsinformationen eines eigenen Fahrzeugs und Umgebungsinformationen des eigenen Fahrzeugs umfassen, wobei die Betriebsszenariodaten dazu konfiguriert sind, bei der Simulation realer Betriebsszenarien zur Durchführung einer Betriebsszenariosimulation zu helfen;
ein erstes Verarbeitungsmodul (502), das dazu konfiguriert ist, auf der Grundlage der Betriebsszenariodaten, die jeweils einem der Betriebsszenarien entsprechen, erste Wahrnehmungsergebnisinformationen zu ermitteln, die einer voreingestellten Fahrzeugfunktion des eigenen Fahrzeugs in jedem der Betriebsszenarien entsprechen, wobei die ersten Wahrnehmungsergebnisinformationen auf der Grundlage von Zuständen des eigenen Fahrzeugs und von Objekten in der Umgebung in einem simulierten Betriebsszenario ermittelt werden;
ein zweites Verarbeitungsmodul (503), das dazu konfiguriert ist, eine Wahrnehmungsausfall-Simulationsverarbeitung an den ersten Wahrnehmungsergebnisinformationen durchzuführen, um zweite Wahrnehmungsergebnisinformationen zu erhalten, die jeweils jedem der Betriebsszenarien entsprechen, wobei die Wahrnehmungsausfall-Simulationsverarbeitung eine Wahrnehmungsausfall-Simulationsverarbeitung für unterschiedliche Dauer und/oder mit unterschiedlichen Frequenzen umfasst; und
ein drittes Verarbeitungsmodul (504), das dazu konfiguriert ist, die voreingestellte Fahrzeugfunktion auf der Grundlage der zweiten Wahrnehmungsergebnisinformationen zu überprüfen, um ein Überprüfungsergebnis zu erhalten, wobei das Überprüfungsergebnis mindestens einen der folgenden Punkte umfasst: einen Funktionsreaktionszustand der voreingestellten Fahrzeugfunktion unter den zweiten Wahrnehmungsergebnisinformationen und einen von der voreingestellten Fahrzeugfunktion zugelassenen Wahrnehmungsleistungsschwellenwert, und , wobei der Wahrnehmungsleistungsschwellenwert einen Dauer-Schwellenwert und/oder einen Häufigkeitsschwellenwert für die Wahrnehmungsausfall-Simulationsverarbeitung umfasst.

12. Vorrichtung gemäß Anspruch 11, wobei das zweite Verarbeitungsmodul (503) umfasst:
eine erste Verarbeitungseinheit (5031), die dazu konfiguriert ist, dass sie für jedes Betriebsszenario auf der Grundlage der ersten Wahrnehmungsergebnisinformationen in dem Betriebsszenario ein Zielobjekt ermittelt, das eine erste Bedingung erfüllt;
eine zweite Verarbeitungseinheit (5032), die dazu konfiguriert ist, dass sie auf der Grundlage der Simulationsregel für Wahrnehmungsausfälle einen dem Zielobjekt entsprechenden Ausfallmodus ermittelt;
eine dritte Verarbeitungseinheit (5033), die dazu konfiguriert ist, dass sie auf der Grundlage des Fehlermodus eine Erkennungsfehler-Simulationsverarbeitung für das erste Erkennungsergebnis des Zielobjekts durchführt, um ein zweites Erkennungsergebnis eines Erkennungsfehlers des Zielobjekts zu erhalten; und
eine vierte Verarbeitungseinheit (5034), die dazu konfiguriert ist, auf der Grundlage des zweiten Wahrnehmungsergebnisses des Zielobjekts die dem Betriebsszenario entsprechenden Informationen zum zweiten Wahrnehmungsergebnis zu ermitteln.

13. Vorrichtung gemäß Anspruch 11, wobei das erste Verarbeitungsmodul (502) umfasst:
eine erste Bestimmungseinheit (5021), die dazu konfiguriert ist, für jedes Betriebsszenario erste Wahrnehmungsergebnisinformationen des Eigenfahrzeugs an mindestens einem Trajektorienpunkt in dem Betriebsszenario auf der Grundlage der dem Betriebsszenario entsprechenden Betriebsszenariodaten zu ermitteln.

14. Ein computerlesbares Speichermedium, **dadurch gekennzeichnet, dass** das Speichermedium ein Computerprogramm speichert, das bei Ausführung durch einen Prozessor das Verfahren zur Überprüfung einer Fahrzeugfunktion gemäß einem der Ansprüche 1 bis 10 implementiert.

15. Elektronisches Gerät, umfassend:
einen Prozessor (11); und
einen Speicher (12), der dazu konfiguriert ist, eine ausführbare Anweisung zu speichern;
**dadurch gekennzeichnet, dass** der Prozessor dazu konfiguriert ist, dass er die ausführbare Anweisung aus dem Speicher liest und die Anweisung ausführt, um das Verfahren zur Überprüfung einer Fahrzeugfunktion gemäß einem der Ansprüche 1 bis 10 zu implementieren.

## Revendications

1. Procédé de vérification d'une fonction d'un véhicule, **caractérisé en ce qu'**il comprend :
l'acquisition (201) de données de scénario de fonctionnement correspondant respectivement à chacun d'un ou plusieurs scénarios de fonctionnement, les données de scénario de fonctionnement comprenant des informations d'état d'un véhicule propre et des informations sur l'environnement environnant du véhicule propre, dans lequel les données de scénario de fonctionnement sont configurées pour aider à simuler des scénarios de fonctionnement réels afin d'effectuer une simulation de scénario de fonctionnement ;
la détermination (202), sur la base des données de scénario de fonctionnement correspondant respectivement à chacun des scénarios de fonctionnement, de premières informations de résultat de perception correspondant à une fonction prédéfinie du véhicule concerné dans chacun des scénarios de fonctionnement, dans lequel les premières informations de résultat de perception sont déterminées sur la base des états du véhicule concerné et des objets environnants dans un scénario de fonctionnement simulé ;
effectuer (203) un traitement de simulation de défaillance de perception sur les premières informations de résultat de perception sur la base d'une règle de simulation de défaillance de perception afin d'obtenir des deuxièmes informations de résultat de perception correspondant respectivement à chacun des scénarios d'exploitation, dans lequel le traitement de simulation de défaillance de perception comprend un traitement de simulation de défaillance de perception pour différentes durées et/ou à différentes fréquences ; et
vérifier (204) la fonction prédéfinie du véhicule sur la base des informations relatives au deuxième résultat de perception afin d'obtenir un résultat de vérification , dans lequel le résultat de vérification comprend au moins l'un parmi un état de réponse de la fonction prédéfinie du véhicule en fonction des informations relatives au deuxième résultat de perception et un seuil de performance de perception d'un algorithme de perception autorisé par la fonction prédéfinie du véhicule, et dans lequel le seuil de performance de perception comprend un seuil de durée et/ou un seuil de fréquence pour le traitement de simulation de défaillance de perception .

2. Procédé selon la revendication 1, dans lequel les premières informations de résultat de perception comprennent un premier résultat de perception d'au moins un objet situé autour du véhicule propre ; et
la réalisation (203) d'un traitement de simulation de défaillance de perception sur les premières informations de résultat de perception sur la base d'une règle de simulation de défaillance de perception afin d'obtenir des deuxièmes informations de résultat de perception correspondant respectivement à chacun des scénarios de fonctionnement comprend :
pour chacun des scénarios d'exploitation, déterminer (2031), sur la base des premières informations de résultat de perception dans le scénario d'exploitation, un objet cible remplissant une première condition ;
déterminer (2032), sur la base de la règle de simulation de défaillance de perception, un mode de défaillance correspondant à l'objet cible ;
effectuer (2033) un traitement de simulation de défaillance de perception sur le premier résultat de perception de l'objet cible sur la base du mode de défaillance afin d'obtenir un deuxième résultat de perception correspondant à la défaillance de perception de l'objet cible ; et
déterminer (2034), sur la base du deuxième résultat de perception de l'objet cible, les informations de deuxième résultat de perception correspondant au scénario d'exploitation.

3. Procédé selon la revendication 2, dans lequel le mode de défaillance comprend au moins un type de sous-mode ; et pour tout sous-mode,
l'exécution (2033) d'un traitement de simulation de défaillance de perception sur le premier résultat de perception de l'objet cible en fonction du mode de défaillance afin d'obtenir un deuxième résultat de perception correspondant à la défaillance de perception de l'objet cible comprend :
l'exécution (20331) d'un traitement de simulation de défaillance de perception sur le premier résultat de perception de l'objet cible, sur la base d'une sous-règle de simulation correspondant au sous-mode, afin d'obtenir le deuxième résultat de perception de l'objet cible dans le sous-mode ; et
la détermination (2034), sur la base du deuxième résultat de perception de l'objet cible, des informations de deuxième résultat de perception correspondant au scénario d'exploitation, comprennent :
le déterminage (20341), sur la base du deuxième résultat de perception correspondant à l'objet cible dans le sous-mode, des informations de deuxième résultat de perception correspondant au sous-mode dans le scénario de fonctionnement.

4. Procédé selon l'une quelconque des revendications 1 à 3, dans lequel la vérification (204) de la fonction prédéfinie du véhicule sur la base des informations de deuxième résultat de perception afin d'obtenir un résultat de vérification comprend :
déterminer (2041a), sur la base des informations relatives au deuxième résultat de perception correspondant au sous-mode du scénario de fonctionnement, un état de réponse de la fonction prédéfinie du véhicule dans le sous-mode du scénario de fonctionnement ;
déterminer (2042a), sur la base de l'état de réponse de la fonction prédéfinie du véhicule dans le sous-mode du scénario de fonctionnement, un seuil de performance de perception de la fonction prédéfinie de l' e du véhicule dans le scénario de fonctionnement ; et
déterminer (2043a), sur la base du seuil de performance de perception de la fonction prédéfinie du véhicule dans le scénario de fonctionnement, un seuil de performance de perception cible correspondant à la fonction prédéfinie du véhicule en tant que résultat de vérification.

5. Procédé selon la revendication 3 ou la revendication 4 lorsqu'elle dépend de la revendication 3, dans lequel l'exécution (20331) d'un traitement de simulation de défaillance de perception sur le premier résultat de perception de l'objet cible, sur la base d'une sous-règle de simulation correspondant au sous-mode, afin d'obtenir le deuxième résultat de perception de l'objet cible dans le sous-mode, comprend :
la détermination (203311) d'au moins une valeur d'indicateur de performance de perception sur la base de la sous-règle de simulation correspondant au sous-mode ; et
pour toute valeur d'indicateur de performance de perception, la mise à jour (203311) du premier résultat de perception de l'objet cible sur la base de la valeur d'indicateur de performance de perception afin d'obtenir le deuxième résultat de perception de l'objet cible correspondant à la valeur d'indicateur de performance de perception.

6. Procédé selon la revendication 3 ou l'une quelconque des revendications 4 à 5 lorsqu'elles dépendent de la revendication 3, dans lequel, pour tout sous-mode, la détermination (20341), sur la base du deuxième résultat de perception correspondant à l'objet cible dans le sous-mode, des informations de deuxième résultat de perception correspondant au sous-mode dans le scénario d'exploitation comprend :
déterminer (203411), sur la base du deuxième résultat de perception de l'objet cible correspondant à la valeur de l'indicateur de performance de perception, les informations relatives au deuxième résultat de perception correspondant à la valeur de l'indicateur de performance de perception ; et
la vérification de la fonction prédéfinie du véhicule sur la base des informations relatives au deuxième résultat de perception afin d'obtenir un résultat de vérification comprend :
déterminer (2041b), sur la base des informations relatives au deuxième résultat de perception correspondant à la valeur de l'indicateur de performance de perception, un état de réponse de fonction correspondant à la fonction prédéfinie du véhicule pour ladite valeur de l'indicateur de performance de perception ;
la détermination (2042b) d'un seuil de performance de perception de la fonction prédéfinie du véhicule dans le sous-mode, sur la base de l'état de réponse de la fonction correspondant à la fonction prédéfinie du véhicule à l' e la valeur de l'indicateur de performance de perception ; et
déterminer (2043b), sur la base du seuil de performance de perception correspondant à la fonction prédéfinie du véhicule dans le sous-mode, un seuil de performance de perception de la fonction prédéfinie du véhicule dans le scénario d'exploitation, en tant que résultat de vérification.

7. Procédé selon l'une quelconque des revendications 2 à 6, dans lequel la détermination (202), sur la base des données de scénario d'exploitation correspondant respectivement à chacun des scénarios d'exploitation, des premières informations de résultat de perception correspondant à une fonction prédéfinie du véhicule propre dans chacun des scénarios d'exploitation, comprend :
pour tout scénario d'exploitation, déterminer (2021), sur la base des données de scénario d'exploitation correspondant au scénario d'exploitation, les informations de premier résultat de perception du véhicule propre en au moins un point de trajectoire dans le scénario d'exploitation ; et
la détermination (2031), sur la base des premières informations de résultat de perception dans le scénario de fonctionnement, un objet cible satisfaisant à une première condition comprend :
déterminer (20311), sur la base des premières informations de résultat de perception correspondant au point de trajectoire, l'objet cible dans différentes zones autour du véhicule propre.

8. Procédé selon l'une quelconque des revendications 1 à 7, dans lequel la vérification (204) de la fonction prédéfinie du véhicule sur la base des deuxièmes informations de résultats de perception afin d'obtenir un résultat de vérification comprend :
déterminer (204A), sur la base des informations de résultats de perception secondaires, un seuil de performance de perception correspondant à la fonction prédéfinie du véhicule dans chacune des différentes zones autour du véhicule propre ; et
prendre (204B) le seuil de performance de perception correspondant à la fonction prédéfinie du véhicule dans chacune des différentes zones autour du véhicule propre comme résultat de vérification.

9. Procédé selon l'une quelconque des revendications 1 à 6, dans lequel la vérification (204) de la fonction prédéfinie du véhicule sur la base des informations de deuxième résultat de perception afin d'obtenir un résultat de vérification comprend :
pour tout scénario de fonctionnement, le fait de déterminer (2041) les données cartographiques du scénario de fonctionnement sur la base d' s les données de scénario de fonctionnement du scénario de fonctionnement ;
la détermination (2042), sur la base des informations de résultat de perception secondaires et des données cartographiques du scénario de fonctionnement, d'informations de commande du véhicule propre en utilisant un algorithme fonctionnel correspondant à la fonction prédéfinie du véhicule ;
déterminer (2043), sur la base des informations de commande et d'un modèle dynamique du véhicule propre, des informations d'état de conduite du véhicule propre commandé selon les informations de commande ;
déterminer (2044), sur la base des informations d'état de conduite et des données du scénario d'exploitation correspondant aux informations du deuxième résultat de perception, l'état de réponse de la fonction du véhicule prédéfinie dans le cadre des informations du deuxième résultat de perception ; et
déterminer (2045) le résultat de la vérification sur la base de l'état de réponse de la fonction prédéfinie du véhicule compte tenu des informations relatives au deuxième résultat de perception.

10. Procédé selon la revendication 9, dans lequel la détermination (2044), sur la base des informations d'état de conduite et des données de scénario de fonctionnement correspondant aux informations de deuxième résultat de perception, de l'état de réponse de la fonction prédéfinie du véhicule en fonction des informations de deuxième résultat de perception comprend :
le déterminage, sur la base des informations d'état de conduite et des données de scénario de fonctionnement correspondant aux informations de deuxième résultat de perception, d'un état de résultat attendu du véhicule propre dans le cadre de la fonction prédéfinie du véhicule ;
en réponse au fait que l'état du résultat attendu est atteint, déterminer l'état de réponse de la fonction prédéfinie du véhicule, compte tenu des informations relatives au deuxième résultat de perception, comme étant un succès ; ou
en réponse au fait que l'état du résultat attendu n'est pas atteint, déterminer l'état de réponse de la fonction prédéfinie du véhicule, compte tenu des informations relatives au deuxième résultat de perception, comme étant un échec.

11. Dispositif destiné à vérifier une fonction du véhicule, **caractérisé en ce qu'**il comprend :
un module d'acquisition (501) configuré pour acquérir des données de scénario de fonctionnement correspondant respectivement à chacun d'un ou plusieurs scénarios de fonctionnement, les données de scénario de fonctionnement comprenant des informations d'état d'un véhicule propre et des informations sur l'environnement environnant du véhicule propre, dans lequel les données de scénario de fonctionnement sont configurées pour aider à simuler des scénarios de fonctionnement réels afin d'effectuer une simulation de scénario de fonctionnement ;
un premier module de traitement (502) configuré pour déterminer, sur la base des données de scénario de fonctionnement correspondant respectivement à chacun des scénarios de fonctionnement, des premières informations de résultat de perception correspondant à une fonction prédéfinie du véhicule concerné dans chacun des scénarios de fonctionnement, les premières informations de résultat de perception étant déterminées dans lequel les états du véhicule concerné et des objets environnants sont pris en compte ;
un deuxième module de traitement (503) configuré pour effectuer un traitement de simulation de défaillance de perception sur les premières informations de résultat de perception en fonction d'une règle de simulation de défaillance de perception afin d'obtenir des deuxièmes informations de résultat de perception correspondant respectivement à chacun des scénarios de fonctionnement, dans lequel le traitement de simulation de défaillance de perception comprend un traitement de simulation de défaillance de perception pour différentes durées et/ou à différentes fréquences ; et
un troisième module de traitement (504) configuré pour vérifier la fonction du véhicule prédéfinie sur la base des informations de deuxième résultat de perception afin d'obtenir un résultat de vérification, le résultat de vérification comprenant au moins l'un parmi un état de réponse de la fonction du véhicule prédéfinie dans le cadre des informations de deuxième résultat de perception et un seuil de performance de perception d'un algorithme de perception autorisé par la fonction du véhicule prédéfinie, et , dans lequel le seuil de performance de perception comprend un seuil de durée et/ou un seuil de fréquence pour le traitement de simulation de défaillance de perception .

12. Appareil selon la revendication 11, dans lequel le deuxième module de traitement (503) comprend :
une première unité de traitement (5031) configurée pour, pour tout scénario de fonctionnement, déterminer, sur la base des premières informations de résultat de perception dans le scénario de fonctionnement, un objet cible répondant à une première condition ;
une deuxième unité de traitement (5032) configurée pour déterminer, sur la base de la règle de simulation de défaillance de perception, un mode de défaillance correspondant à l'objet cible ;
une troisième unité de traitement (5033) configurée pour effectuer un traitement de simulation de défaillance de perception sur le premier résultat de perception de l'objet cible en fonction du mode de défaillance afin d'obtenir un deuxième résultat de perception correspondant à une défaillance de perception de l'objet cible ; et
une quatrième unité de traitement (5034) configurée pour déterminer, sur la base du deuxième résultat de perception de l'objet cible, les informations relatives au deuxième résultat de perception correspondant au scénario d'opération.

13. Dispositif selon la revendication 11, dans lequel le premier module de traitement (502) comprend :
une première unité de détermination (5021) configurée pour, pour tout scénario de fonctionnement, déterminer des informations de premier résultat de perception du véhicule propre en au moins un point de trajectoire dans le scénario de fonctionnement sur la base des données de scénario de fonctionnement correspondant au scénario de fonctionnement.

14. Support de stockage lisible par ordinateur, **caractérisé en ce que** le support de stockage stocke un programme informatique qui, lorsqu'il est exécuté par un processeur, implémente le procédé de vérification d'une fonction d'un véhicule selon l'une quelconque des revendications 1 à 10.

15. Dispositif électronique, comprenant :
un processeur (11) ; et
une mémoire (12) configurée pour stocker une instruction exécutable ;
**caractérisé en ce que** le processeur est configuré pour lire l'instruction exécutable à partir de la mémoire et pour exécuter l'instruction afin d'implémenter le procédé de vérification d'une fonction du véhicule selon l'une quelconque des revendications 1 à 10.
